(19) **Europäisches Patentamt / European Patent Office / Office européen des brevets**

(11) **EP 2 199 152 B1**

(12) **FASCICULE DE BREVET EUROPEEN**

(45) Date de publication et mention
de la délivrance du brevet:
**16.09.2015 Bulletin 2015/38**

(51) Int Cl.:
***B60Q 1/08*** *(2006.01)* ***B60Q 1/14*** *(2006.01)*

(21) Numéro de dépôt: **09179275.4**

(22) Date de dépôt: **15.12.2009**

(54) **Procédé de commutation du mode d'éclairage de projecteurs pour véhicule automobile**

Umschaltverfahren des Beleuchtungsmodus von Kraftfahrzeugscheinwerfern

Method for switching automobile headlight lighting mode

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **19.12.2008 FR 0807302**

(43) Date de publication de la demande:
**23.06.2010 Bulletin 2010/25**

(73) Titulaire: **VALEO VISION**
**93012 Bobigny (FR)**

(72) Inventeurs:
• **Hue, David**
**78400 Chatou (FR)**
• **Moizard, Julien**
**75012 Paris (FR)**
• **Reilhac, Patrice**
**73732 Esslingen (DE)**

(56) Documents cités:
**EP-A1- 0 516 527 DE-A1-102005 061 094
US-A1- 2004 201 483 US-A1- 2007 242 470**

## Description

## Domaine de l'invention

La présente invention concerne un procédé de commutation automatique de projecteurs aptes à émettre un faisceau lumineux pour véhicule automobile d'un mode d'éclairage vers un autre mode d'éclairage, et un dispositif de commutation automatique permettant de mettre en oeuvre ledit procédé.

Elle trouve une application particulière dans le domaine des véhicules automobiles.

## État de la technique

Dans le domaine des véhicules automobiles, un état de la technique antérieur connu de procédé de commutation automatique de projecteurs aptes à émettre un faisceau lumineux pour véhicule automobile d'un mode d'éclairage vers un autre mode d'éclairage, permet de commuter automatiquement les projecteurs du véhicule automobile :

- d'une part d'une position code (feux de croisement allumés) en une position route (feux de route allumés) lorsque le véhicule se trouve dans un environnement non éclairé et sans qu'il y ait de véhicule en face (croisé ou suivi) (première commutation) ;
- et d'autre part d'une position route en une position code lorsqu'il existe un phénomène perturbateur de visibilité tel que du brouillard (deuxième commutation) ou encore lorsque le véhicule se trouve dans un environnement éclairé avec ou sans présence de phénomène perturbateur de visibilité ou encore lorsqu'il y a un véhicule en face (croisé ou suivi) avec ou sans présence de phénomène perturbateur de visibilité. Dans le cas où un phénomène perturbateur de visibilité est présent, la détection du phénomène perturbateur de visibilité et par conséquent cette dernière commutation s'effectuent sur la base d'un phénomène de rétrodiffusion du faisceau lumineux des projecteurs qui résulte de la combinaison de l'éclairage des projecteurs et du phénomène perturbateur de visibilité. Si la rétrodiffusion est trop importante, alors la commutation est effectuée.

Cela évite à un conducteur du véhicule d'être gêné par ce phénomène de rétrodiffusion. Ainsi, grâce à cette deuxième commutation, le phénomène de rétrodiffusion est atténué voire annulé de sorte que le conducteur n'est plus gêné et qu'il n'existe ainsi pas de perte de visibilité de la route par le conducteur. Par ailleurs, parallèlement à cette deuxième commutation, la première commutation est interdite. Son autorisation se fera lorsque les conditions de visibilité se seront améliorées.

Un inconvénient de cet état de la technique antérieur est que dans le mode d'éclairage en position code, le phénomène de rétrodiffusion étant faible, voire inexistant, la détection du phénomène perturbateur de visibilité est plus difficile à effectuer qu'en position route. Aussi, lorsque le phénomène perturbateur de visibilité s'atténue ou disparaît, c'est-à-dire que les conditions de visibilité se seront améliorées, un tel procédé ne permet pas de le détecter et la réactivation de la première commutation ne se fait pas. Les projecteurs demeurent toujours en position code alors que selon les circonstances un retour en position route pourrait être nécessaire.

Un procédé et un dispostif de commutation automatique selon le préambule de la revendication 1 respectivement 16 sont connus du document US 2004/0201483.

## Objet de l'invention

La présente invention a pour but un procédé de commutation automatique de projecteurs aptes à émettre un faisceau lumineux pour véhicule automobile d'un mode d'éclairage vers un autre mode d'éclairage, qui permet de réactiver la commutation en position route du mode d'éclairage des projecteurs, dès que le phénomène perturbateur de visibilité est plus faible voir disparaît complètement.

Selon un premier objet de l'invention, ce but est atteint par un procédé de commutation automatique de projecteurs aptes à émettre un faisceau lumineux pour véhicule automobile d'un premier mode d'éclairage vers un deuxième mode d'éclairage, le premier mode d'éclairage éclairant moins que le deuxième mode d'éclairage, caractérisé en ce qu'il comporte les étapes de

- lorsque les projecteurs sont dans le premier mode d'éclairage, détecter une rétrodiffusion du faisceau lumineux des projecteurs sur un phénomène perturbateur de visibilité ;
- augmenter la portée d'éclairage du faisceau lumineux des projecteurs par rapport à une portée maximum autorisée en fonction de la rétrodiffusion détectée ; et
- effectuer une commutation des projecteurs dans le deuxième mode d'éclairage lorsque la rétrodiffusion atteint un premier seuil déterminé.

Comme on va le voir en détail par la suite, le fait d'augmenter la portée d'éclairage du faisceau lumineux des projecteurs par rapport à une position maximum autorisée permet de mieux éclairer le phénomène perturbateur de visibilité de sorte à rendre possible la mesure de la rétrodiffusion. Si celle-ci s'est atténués voire a disparu, les projecteurs peuvent être re-commutés en position route. Donc on peut réactiver la commutation mode position code en mode position route.

Selon des modes de réalisation non limitatifs, le procédé présente en outre les caractéristiques suivantes :

- Le premier seuil est déterminé de manière à ce que la visibilité dans le deuxième mode d'éclairage soit supérieure à la visibilité dans le premier mode d'éclairage. En effet, l'objectif de cette invention est de pouvoir optimiser la visibilité du conducteur. Ainsi la commutation dans le deuxième mode d'éclairage doit permettre d'augmenter la visibilité du conducteur et non de la diminuer.

- Dans un premier mode de réalisation non limitatif, l'étape de détection d'une rétrodiffusion s'effectue par une mesure d'une distance de visibilité. Cela permet d'être plus précis sur la détection de la rétrodiffusion.

- Selon ce premier mode, l'augmentation de la portée d'éclairage en fonction de la rétrodiffusion détectée s'effectue de manière à pouvoir mesurer la distance de visibilité jusqu'à un premier seuil de visibilité si la distance de visibilité mesurée est supérieure à un deuxième seuil de visibilité. On vérifie ainsi si la distance de visibilité s'est améliorée. Si cette dernière s'est améliorée alors cela signifie que le phénomène perturbateur de visibilité s'est atténué, voire a disparu, et donc que les projecteurs peuvent être recommutés en position route. Donc on peut réactiver la commutation mode position code en mode position route.

- Dans un deuxième mode de réalisation non limitatif, l'étape de détection d'une rétrodiffusion s'effectue par une analyse d'une courbe de niveaux de gris obtenue à partir d'une image acquise de l'environnement du véhicule automobile. Cette analyse est simple à mettre en oeuvre et va ainsi nécessiter qu'une faible puissance de calcul.

- Dans une première variante non limitative de ce deuxième mode, l'analyse de la courbe de niveaux de gris comporte la détermination d'une aire dans ladite courbe et la détection d'une rétrodiffusion s'effectue en fonction d'au moins une première valeur seuil de surface dans ladite aire. Cette mesure permet de suivre le phénomène de rétrodiffusion de façon simple et ainsi sans nécessiter de forte puissance de calcul.

- Selon cette première variante, l'augmentation de la portée d'éclairage en fonction de la rétrodiffusion détectée s'effectue de manière à pouvoir mesurer l'aire dans ladite courbe jusqu'à un premier seuil de surface si l'aire atteint une deuxième valeur seuil de surface. Cette boucle de régulation est également très simple à mettre en oeuvre.

- Dans une deuxième variante non limitative de ce deuxième mode, l'analyse de la courbe de niveaux de gris comporte la détermination d'au moins une tangente à ladite courbe et la détection d'une rétrodiffusion s'effectue en fonction d'au moins une première valeur seuil d'inclinaison d'un coefficient directeur de ladite tangente. La mesure d'au moins un coefficient directeur d'une tangente permet de suivre l'évolution de la courbe de niveau de gris de façon simple.

- Selon cette deuxième variante, l'augmentation de la portée d'éclairage en fonction de la rétrodiffusion détectée s'effectue de manière à pouvoir mesurer un coefficient directeur d'au moins une tangente dans ladite courbe jusqu'à un premier seuil d'inclinaison si le coefficient atteint une deuxième valeur seuil d'inclinaison. Cette boucle de régulation est également très simple à mettre en oeuvre.

- Le procédé comporte en outre une étape supplémentaire d'autoriser la commutation automatique des projecteurs du premier mode d'éclairage vers le deuxième mode d'éclairage lorsque la rétrodiffusion atteint le premier seuil déterminé. Cela permet d'autoriser une telle commutation quand il n'existe plus de risque qu'un conducteur du véhicule soit gêné par une rétrodiffusion. La visibilité est donc devenue moins dégradée dans le deuxième mode que dans le premier mode.

- L'augmentation de la portée d'éclairage du faisceau lumineux des projecteurs s'effectue par paliers. Cette augmentation est simple à effectuer.

- L'augmentation de la portée d'éclairage du faisceau lumineux des projecteurs s'effectue de façon continue. Cela permet d'avoir une augmentation progressive de la portée du faisceau.

- La portée d'éclairage du faisceau lumineux des projecteurs est ajustée en fonction d'un obstacle se situant dans un environnement avant du véhicule automobile. Cela permet de ne pas éblouir un obstacle tel qu'un véhicule arrivant en face du véhicule considéré.

- Le procédé comporte en outre une étape supplémentaire d'effectuer une commutation des projecteurs dans le premier mode d'éclairage en vue de réduire une rétrodiffusion du faisceau lumineux des projecteurs sur un phénomène perturbateur de visibilité lorsque la rétrodiffusion détectée atteint un troisième seuil. Ce troisième seuil correspond ainsi au seuil au dessus duquel le conducteur est gêné par la rétrodiffusion des projecteurs sur le phénomène perturbateur de visibilité en position route.

- Le procédé comporte en outre une étape supplémentaire d'interdire la commutation automatique des projecteurs du premier mode d'éclairage vers le deuxième mode d'éclairage lorsque la rétrodiffusion détectée atteint un troisième seuil. Cela évite de mettre le conducteur d'un véhicule en situation de risque lorsqu'il existe une rétrodiffusion gênante pour le conducteur.

- La commutation des projecteurs dans le premier mode d'éclairage s'effectue sans augmentation de la portée d'éclairage par rapport à la portée maximum autorisée. Cela permet de passer automatiquement d'une position route à une position code réglementée lorsque la rétrodiffusion est gênante pour le conducteur.

- La commutation des projecteurs dans le premier mode d'éclairage s'effectue avec augmentation de la portée d'éclairage par rapport à la portée maximum autorisée. Cela permet de prendre en compte les cas où il existe un phénomène perturbateur de visibilité mais où la rétrodiffusion n'est pas très importante.
- La portée d'éclairage du faisceau lumineux des projecteurs est diminuée au fur et à mesure que la rétrodiffusion augmente. Cela permet d'adapter la rétrodiffusion au phénomène perturbateur de visibilité qui existe.
- L'augmentation de la portée d'éclairage s'effectue en utilisant une fonction de correction en site pour relever le faisceau lumineux des projecteurs lorsque le véhicule automobile comporte une assiette neutre. Cela permet d'utiliser une fonction couramment utilisée dans les véhicules.
- L'augmentation de la portée d'éclairage s'effectue en utilisant une fonction d'interception d'une partie du faisceau lumineux des projecteurs. Cela permet d'avoir une grande flexibilité au niveau de l'augmentation de la portée d'éclairage.

Selon un deuxième objet de l'invention, elle concerne un dispositif de commutation automatique de projecteurs aptes à émettre un faisceau lumineux pour véhicule automobile d'un premier mode d'éclairage vers un deuxième mode d'éclairage, le premier mode d'éclairage éclairant moins que le deuxième mode d'éclairage, caractérisé en ce qu'il comporte :

- une unité d'augmentation de la portée d'éclairage du faisceau lumineux des projecteurs par rapport à une portée maximum autorisée en fonction de la rétrodiffusion détectée ; et
- une unité de contrôle pour :

   ○ lorsque les projecteurs sont dans le premier mode d'éclairage, détecter une rétrodiffusion du faisceau lumineux des projecteurs sur un phénomène perturbateur de visibilité ; et
   ○ effectuer une commutation des projecteurs dans le deuxième mode d'éclairage lorsque la portée d'éclairage (B) est augmentée par rapport à la portée maximum autorisée (BM) et la rétrodiffusion atteint un premier seuil déterminé.

Selon des modes de réalisation non limitatifs, le dispositif présente en outre les caractéristiques suivantes :

- L'unité de contrôle permet en outre d'effectuer une commutation des projecteurs dans le premier mode d'éclairage en vue de réduire une rétrodiffusion du faisceau lumineux des projecteurs sur un phénomène perturbateur de visibilité lorsque la rétrodiffusion détectée atteint un troisième seuil.
- L'unité d'augmentation de la portée d'éclairage du faisceau lumineux des projecteurs comporte un correcteur d'assiette de véhicule automobile. Cela permet d'utiliser un dispositif qui est déjà implanté dans la plupart des véhicules.
- L'unité d'augmentation de la portée d'éclairage du faisceau lumineux des projecteurs comporte un module optique composé d'un cache mobile et d'un actionneur mécanique pour actionner le cache mobile, le cache mobile étant apte à intercepter une partie du faisceau lumineux des projecteurs. Cela permet d'avoir une flexibilité au niveau des portées du faisceau lumineux des projecteurs que l'on veut obtenir.
- Le dispositif met en oeuvre un procédé selon la présente invention.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'invention.

**Brève description des figures**

D'autres caractéristiques et avantages de la présente invention seront mieux compris à l'aide de la description et des dessins non limitatifs parmi lesquels :

- la Fig. 1 représente un organigramme général du procédé de commutation selon l'invention ;
- la Fig. 2 représente un organigramme détaillé d'un premier mode de réalisation non limitatif du procédé de commutation de la Fig. 1 ;
- la Fig. 3 représente un organigramme détaillé d'une première variante non limitative d'un deuxième mode de réalisation non limitatif du procédé de commutation de la Fig. 1 ;
- la Fig. 4 représente un organigramme détaillé d'une deuxième variante non limitative d'un deuxième mode de réalisation non limitatif du procédé de commutation de la Fig. 1 ;
- la Fig. 5 représente un organigramme détaillé d'une étape du procédé de commutation selon la Fig. 1 ;
- la Fig. 6 est une représentation schématique d'une image de l'environnement d'un véhicule acquise par l'étape illustrée à la Fig. 5 en l'absence de brouillard ;
- la Fig. 7 est une représentation schématique d'une image de l'environnement d'un véhicule acquise par l'étape illustrée à la Fig. 5 en présence de brouillard ;
- la Fig. 8 représente l'image de la Fig. 6 et une courbe de niveaux de gris associée ;
- la Fig. 9 représente l'image de la Fig. 7 et une courbe de niveaux de gris associée ;
- la Fig. 10 représente l'image de la Fig. 6 sur laquelle est superposée la courbe de niveaux de gris associée de la Fig. 8 et une aire dans cette courbe de niveaux de gris ;
- la Fig. 11 représente l'image de la Fig. 7 sur laquelle est superposée la courbe de niveaux de gris associée de la Fig. 9 et une aire dans cette courbe de niveaux de gris ;

- la Fig. 12 illustre une variation en fonction du temps de l'aire dans une courbe de niveaux de gris calculée par l'étape illustrée à la Fig. 5;
- la Fig. 13 représente l'image de la Fig. 6 sur laquelle est superposée la courbe de niveaux de gris de la Fig. 8 avec une tangente ;
- la Fig. 14 représente l'image de la Fig. 7 sur laquelle est superposée la courbe de niveaux de gris de la Fig. 9 avec une tangente ;
- la Fig. 15 illustre une variation en fonction du temps :

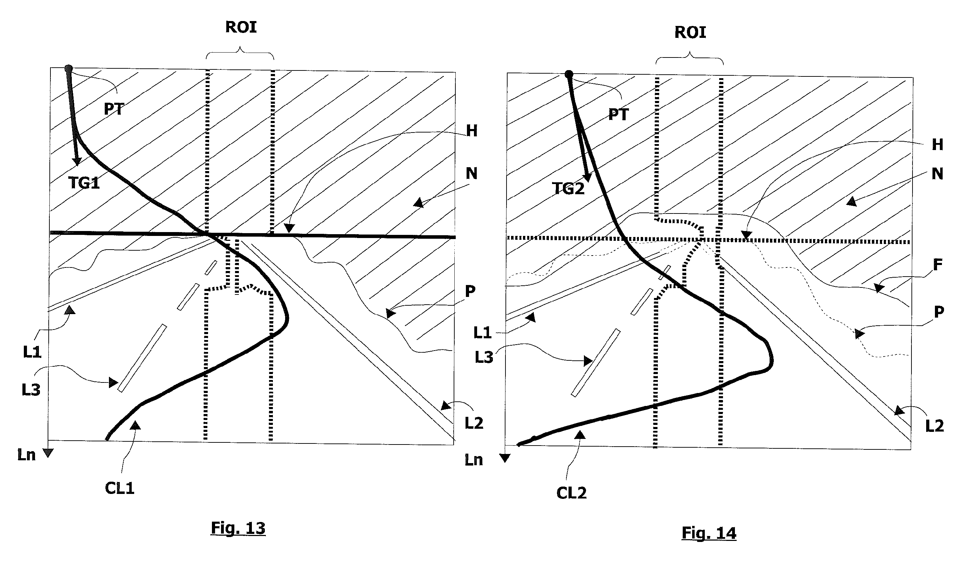

  ◦ - d'une distance de visibilité en fonction d'un coefficient directeur d'une tangente issue d'une courbe de niveaux de gris telle que celle illustrée à la Fig. 14, et
  ◦ d'une distance de visibilité en fonction de données empiriques acquises ;

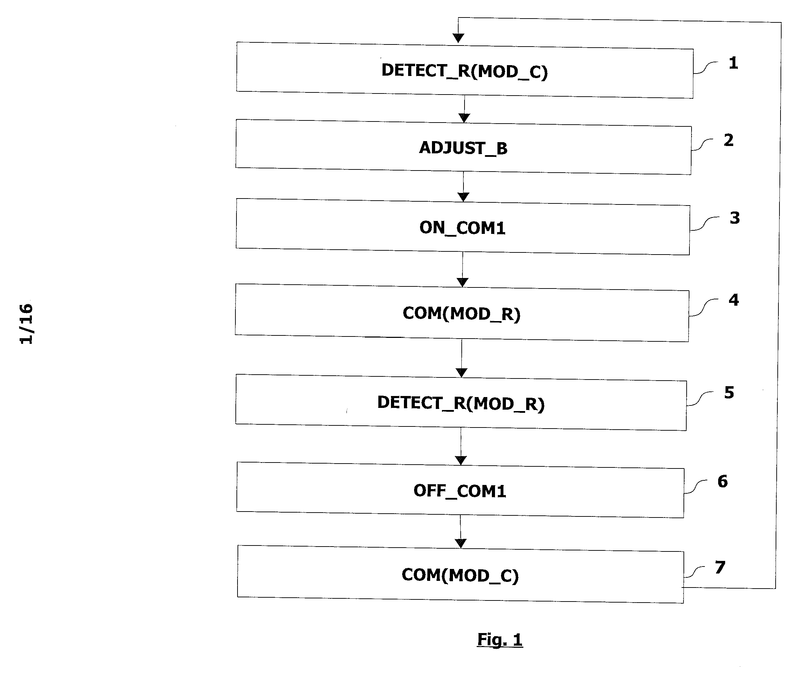

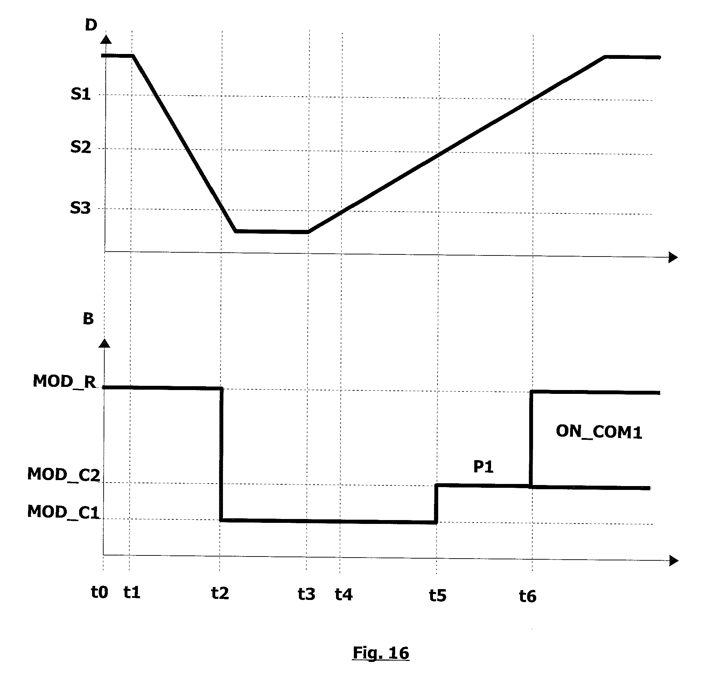

- la Fig. 16 représente un diagramme d'un premier exemple non limitatif de commutation de projecteurs d'un véhicule automobile avec une augmentation de la portée d'éclairage desdits projecteurs selon le procédé de commutation de la Fig. 1 ;

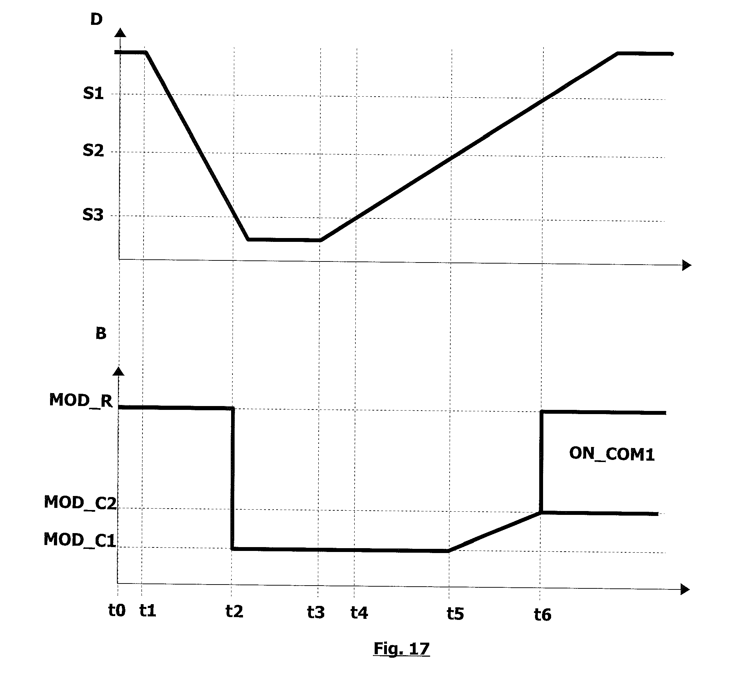

- la Fig. 17 représente un diagramme d'un deuxième exemple non limitatif de commutation de projecteurs d'un véhicule automobile avec une augmentation de la portée d'éclairage desdits projecteurs selon le procédé de commutation de la Fig. 1 ;

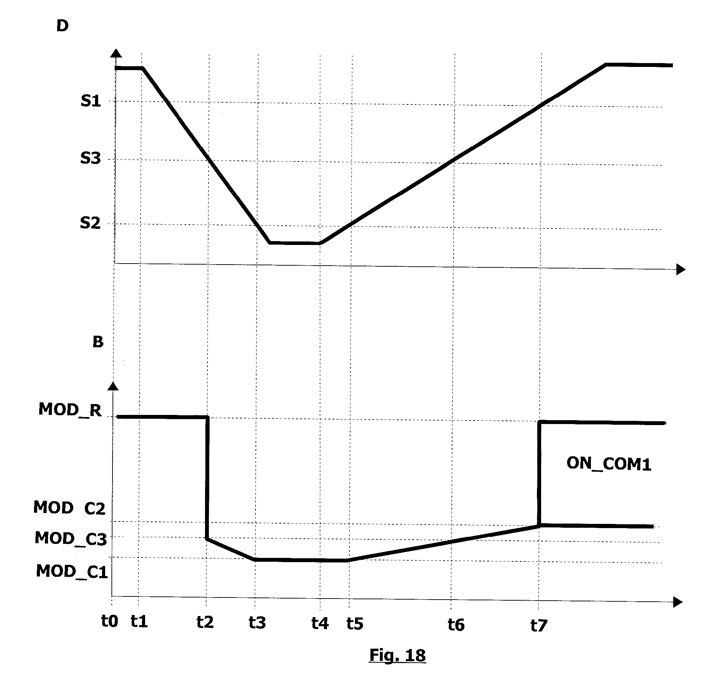

- la Fig. 18 représente un diagramme d'un troisième exemple non limitatif de commutation de projecteurs d'un véhicule automobile avec une augmentation de la portée d'éclairage desdits projecteurs selon le procédé de commutation de la Fig. 1 ;

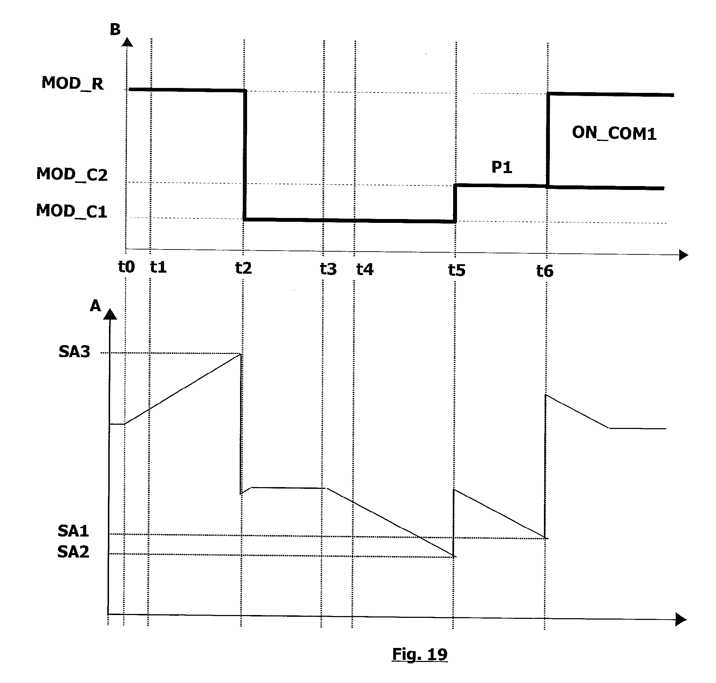

- la Fig. 19 représente un diagramme d'un quatrième exemple non limitatif de commutation de projecteurs d'un véhicule automobile avec une augmentation de la portée d'éclairage desdits projecteurs selon le procédé de commutation de la Fig. 1 ; et

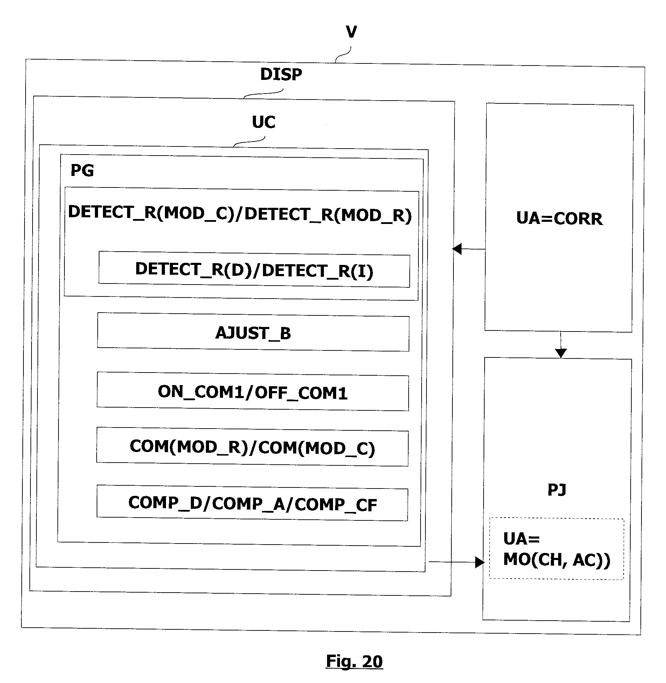

- la Fig. 20 illustre un mode de réalisation non limitatif d'un dispositif de mise en oeuvre du procédé de la Fig. 1.

**Description détaillée de modes de réalisation non limitatifs de l'invention**

Le procédé de commutation automatique de projecteurs aptes à émettre un faisceau lumineux pour véhicule automobile d'un mode d'éclairage vers un autre mode d'éclairage, selon l'invention, est décrit dans un mode de réalisation non limitatif à la Fig. 1.

Par véhicule automobile, on entend tout véhicule comprenant un moteur.

Le procédé de commutation comporte les étapes suivantes telles qu'illustrées à la Fig 1 :

- lorsque les projecteurs sont dans un premier mode d'éclairage MOD_C, détecter une rétrodiffusion du faisceau lumineux FX des projecteurs PJ sur un phénomène perturbateur de visibilité F ;

- augmenter la portée d'éclairage B du faisceau lumineux FX des projecteurs PJ par rapport à une portée maximum autorisée BM en fonction de la rétrodiffusion détectée ; et
- effectuer une commutation des projecteurs PJ dans un deuxième mode d'éclairage MOD_R lorsque la rétrodiffusion atteint un premier seuil déterminé T1 .

Dans un mode de réalisation non limitatif, le procédé comporte en outre l'étape supplémentaire d'autoriser la commutation automatique des projecteurs du premier mode d'éclairage vers le deuxième mode d'éclairage lorsque la rétrodiffusion atteint le premier seuil déterminé T1 (étape ON_COM1).

Dans un mode de réalisation non limitatif, le procédé comporte en outre l'étape d'effectuer une commutation des projecteurs dans le premier mode d'éclairage MOD_C en vue de réduire une rétrodiffusion du faisceau lumineux FX des projecteurs PJ sur un phénomène perturbateur de visibilité F lorsque la rétrodiffusion détectée atteint un troisième seuil de visibilité T3.

Dans un mode de réalisation non limitatif, le procédé comporte en outre l'étape supplémentaire d'interdire la commutation automatique des projecteurs du premier mode d'éclairage vers le deuxième mode d'éclairage lorsque la rétrodiffusion détectée atteint un troisième seuil de visibilité T3 (étape OFF_COM1).

On notera que ces deux dernières étapes supplémentaires peuvent ne pas être comprises dans le procédé décrit, mais peuvent faire partie d'un autre procédé exécuté en amont ou en aval du procédé décrit.

Pour la suite de la description, dans le mode de réalisation non limitatif décrit, le procédé comprend ces deux étapes supplémentaires.

Les étapes du procédé sont décrites en détail ci-après.

**Dans une première étape 1),** lorsque les projecteurs PJ sont dans un premier mode d'éclairage MOD_C, on détecte une rétrodiffusion du faisceau lumineux FX des projecteurs PJ sur un phénomène perturbateur de visibilité F.

Le phénomène perturbateur de visibilité F peut être par exemple du brouillard.

Bien entendu, le procédé peut s'appliquer à d'autres phénomènes perturbateurs de visibilité, c'est-à-dire tout phénomène F qui crée une perturbation atmosphérique de sorte à engendrer une perte de visibilité pour un utilisateur du véhicule V, tel que de la pluie forte ou encore des projections d'eau (appelées Gischt en allemand ou Spray en anglais) générées par des véhicules devançant le véhicule V considéré, dans un exemple.

Dans un exemple non limitatif, le premier mode d'éclairage est le mode en position code MOD_C (feux de croisement allumés).

On notera que lorsque les projecteurs PJ sont dans le premier mode d'éclairage MOD_C, cela signifie que l'on est soit dans un environnement éclairé avec ou sans présence d'un phénomène perturbateur de visibilité F, soit dans un environnement non éclairé avec présence d'un phénomène perturbateur de visibilité F, soit dans un environnement avec la présence d'un véhicule en face (croisé ou suivi) avec ou sans présence de phénomène perturbateur de visibilité.

Dans la suite de la description, un phénomène perturbateur de visibilité F tel que du brouillard est pris comme exemple non limitatif.

• Premier mode de réalisation : mesure d'une distance de visibilité.

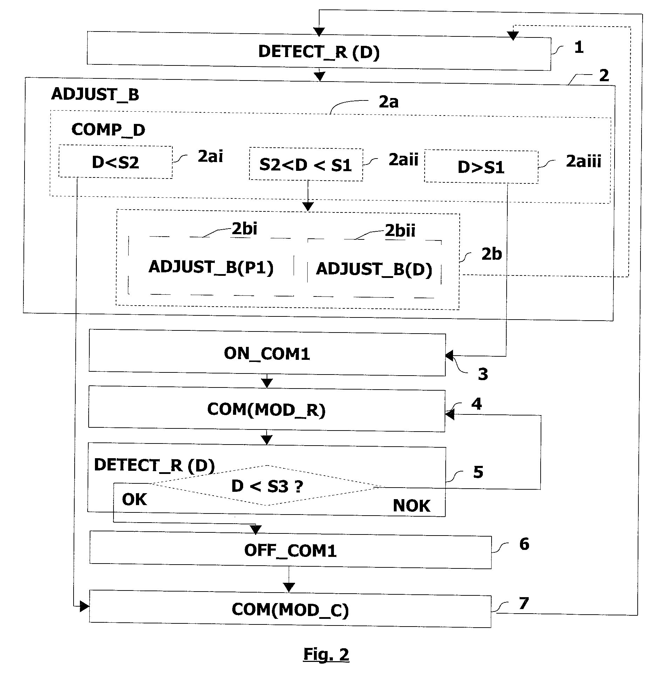

Dans un premier mode de réalisation non limitatif, illustré à la Fig. 2, l'étape de détection d'une rétrodiffusion s'effectue par une mesure d'une distance de visibilité D (étape DETECT_R(D)).

Des méthodes utilisant une caméra vidéo ou des capteurs de distance tel qu'un lidar, bien connues de l'homme du métier, peuvent être utilisées pour mesurer la distance de visibilité D.

La mesure d'une distance de visibilité D permet de déterminer s'il existe un phénomène perturbateur de visibilité F et quelle est sa densité. Ainsi, on connaît la rétrodiffusion du faisceau lumineux FX sur ledit phénomène perturbateur de visibilité.

Dans des exemples non limitatifs, dans le cas d'un phénomène perturbateur de visibilité tel que du brouillard, lorsque le brouillard F est de :

- faible densité, la distance de visibilité D correspondante se situe au-delà de 100 mètres (ente 100 et 150 mètres par exemple),
- moyenne densité, la distance de visibilité D correspondante se situe entre 60 mètres et 100 mètres, et
- forte densité, la distance de visibilité D correspondante est de moins de 60 mètres.

• Deuxième mode de réalisation : Analyse d'une courbe de niveaux de gris.

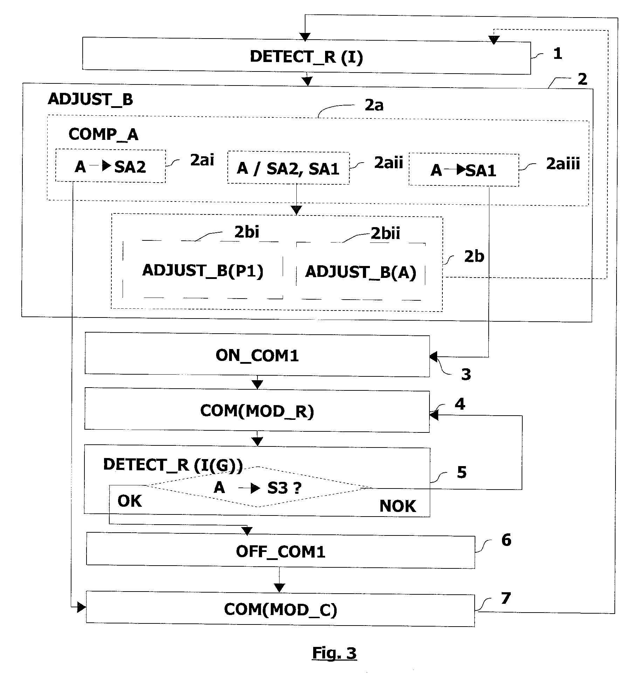

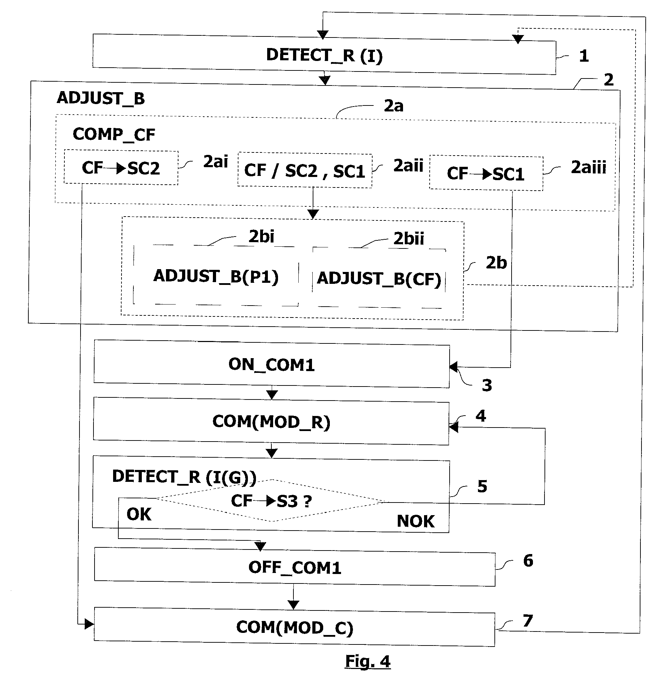

Dans un deuxième mode de réalisation non limitatif, illustré à la Fig. 3 et 4, l'étape de détection d'une rétrodiffusion s'effectue par une analyse d'une courbe de niveaux de gris obtenue à partir d'une image acquise I de l'environnement du véhicule automobile (étape DETECT_R(I)).

L'analyse d'une courbe de niveau de gris comporte les deux étapes suivantes :

- détermination d'une courbe de niveau de gris ;
- analyse de cette courbe de niveau de gris.

*Première étape : détermination d'une courbe de niveau de gris.*

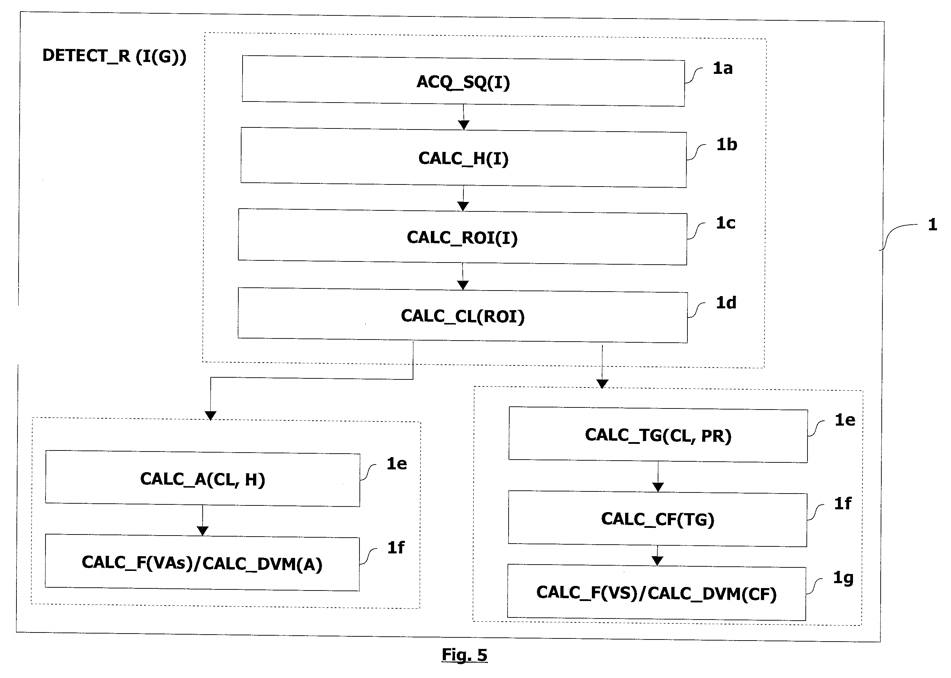

Dans un mode de réalisation non limitatif, la détermination d'une courbe de niveau de gris en vue de l'analyse d'une rétrodiffusion comporte, telle qu'illustrée sur la Fig. 5, les sous-étapes de :

- acquérir au moins une image I par une caméra CAM (étape ACQ_SQ(I)),
- déterminer au moins un point d'intérêt H dans une image I acquise de l'environnement du véhicule V (étape CALC_H(I)) ;
- déterminer une région d'intérêt ROI dans ladite image I (étape CALC_ROI(I)) ; et
- déterminer une courbe de niveaux de gris CL à partir de ladite région d'intérêt ROI (étape CALC_CL(ROI)) ;

Ces sous-étapes sont décrites en détail ci-après.

**Dans une première sous-étape 1a)**, on acquiert au moins une image I par la caméra du véhicule V.

La caméra vidéo CAM étant placée, dans l'exemple pris, à l'avant du véhicule V, l'image acquise I correspond à l'environnement E du véhicule V se trouvant dans le champ de la caméra CAM et donc à l'avant du véhicule V. On va donc détecter un phénomène perturbateur F tel que du brouillard se trouvant à l'avant du véhicule V.

La lumière issue d'un faisceau lumineux FX émis depuis un des projecteurs PJ est diffusée en présence de particules du brouillard F en suspension dans l'atmosphère. La longueur d'onde de ce faisceau lumineux étant compatible avec le spectre d'analyse de la camera CAM, et les particules constitutives du brouillard F se situant dans le champ de vision de la camera CAM, il est alors possible de capter une image intégrant la lumière diffusée dans le brouillard F.

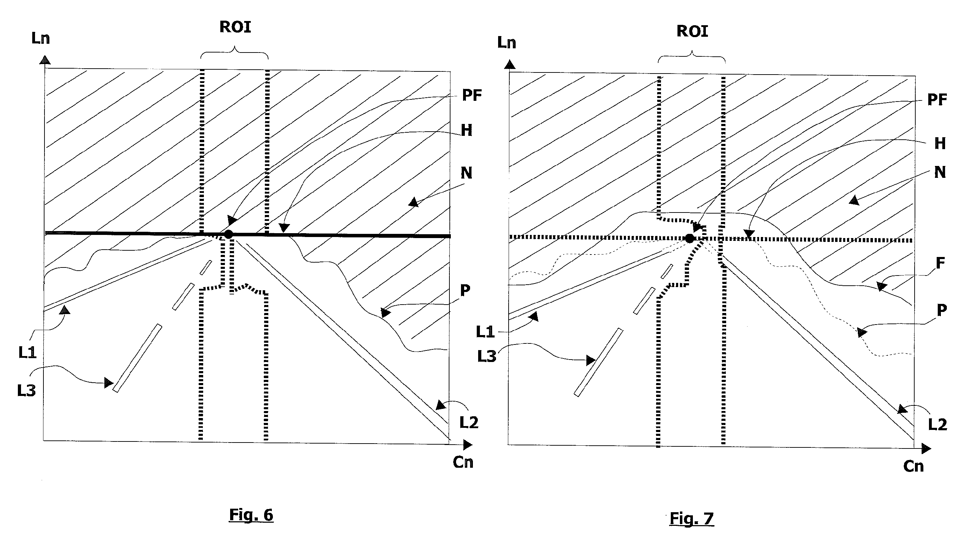

La Fig. 6 montre un exemple schématique d'image acquise I de nuit en l'absence de brouillard F, tandis que la Fig. 7 montre un exemple schématique d'une image acquise I de nuit en présence de brouillard F. En abscisse d'une image I sont représentées les colonnes Cn de cette image I, tandis qu'en ordonnée sont représentées les lignes Ln de cette image I.

Ces images I donnent un aperçu de la lumière diffusée de nuit avec un faisceau lumineux FX de projecteurs PJ.

La partie blanche représente la lumière diffusée de nuit avec le faisceau lumineux FX, tandis que la partie hachurée en diagonale notée N représente l'environnement E, ici à l'avant du véhicule V, dans le champ de la caméra CAM non éclairé par le faisceau lumineux FX.

Sur les deux figures Fig. 6 et Fig. 7, on peut voir :

- une route sur laquelle roule le véhicule V, représentée par les deux lignes de marquage au sol L1 et L2, et celle du milieu L3, et
- un paysage P bordant la route.

Sur la Fig. 7, le paysage P bordant la route est représenté en pointillé car il est voilé par le brouillard F représenté de façon schématique.

**Dans une deuxième sous-étape 1b)**, on détermine au moins un point d'intérêt H dans une image I acquise de l'environnement E du véhicule V.

Dans un mode de réalisation non limitatif, ce point d'intérêt se situe sur la ligne d'horizon H dans l'image acquise I.

On peut dans des exemples non limitatifs, déterminer la ligne d'horizon H à partir d'un calcul de point de fuite PF dans l'image I issu de l'intersection du tracé des lignes blanches L1 et L2 sur la route, ou encore la déterminer à partir de capteurs d'assiette.

La détermination de la ligne d'horizon H dans une image étant connue de l'homme du métier, elle n'est pas décrite en détail ici.

On notera que le fait de déterminer la ligne d'horizon H comme point(s) d'intérêt est facile à calculer.

La ligne d'horizon H est représentée sur les deux Fig. 6 et 7.

Sur la Fig. 7, la ligne d'horizon H est en pointillée car elle est voilée en raison du brouillard F.

**Dans une troisième sous-étape 1c)**, on détermine une région d'intérêt ROI dans ladite image I.

Dans des exemples non limitatifs la région d'intérêt ROI peut être :

- une ligne droite verticale passant par un point de référence PR dans l'image I,
- déterminée au voisinage d'un point de référence PR par une surface se situant de part et d'autre du point de référence telle qu'illustrée sur la Fig. 6 et la Fig. 7 par lignes en pointillés.

Dans un mode de réalisation non limitatif, le point de référence PR est le point de fuite PF tel qu'illustré sur les Fig. 6 et Fig. 7.

Dans une variante de ce mode, le point de fuite PF est centré sur l'image I acquise. Ainsi, pour un exemple d'image I de format 640*480, son abscisse PFx se situe à 320 pixels, son ordonnée PFy est sur la ligne d'horizon H. On se place dans le cas où l'axe optique de la caméra CAM est parallèle à la direction du véhicule V.

Une région d'intérêt ROI selon le deuxième exemple de réalisation est déterminée de la manière suivante, dans un mode de réalisation non limitatif :

- dans une première étape, on détermine les contours dans l'image I de sorte à enlever des zones dans l'image I non homogènes, le but étant d'avoir un même niveau de gris en moyenne. Dans des exemple non limitatifs, des méthodes de détection de contours (appelées « edge method » en anglais) telles que les méthodes Sobel, Prewitt, Roberts, Zerocross, Canny etc. peuvent être utilisées ;
- dans une deuxième étape, on détermine la région d'intérêt ROI en partant de la ligne d'horizon H et en utilisant un algorithme d'accroissement de région vers le haut et vers le bas de l'image acquise I, bien connue de l'homme du métier. On notera que pour déterminer la ligne d'horizon H, on peut dans des exemples non limitatifs, la déterminer à partir d'un calcul de point de fuite PF dans l'image I issu de l'intersection du tracé des lignes blanches L1 et L2 sur la route, ou encore la déterminer à partir de capteurs d'assiette. La détermination de la ligne d'horizon H dans une image étant connue de l'homme du métier, elle n'est pas décrite en détail ici.

Ainsi, on obtient une région d'intérêt ROI homogène dans laquelle sont exclus :

- le bruit, les parasites, et
- les objets non homogènes tels que des véhicules, ou les lignes blanches de la route telles que la ligne L3, comme illustré sur la Fig. 6 et la Fig. 7.

Dans un mode de réalisation non limitatif, afin d'avoir une région ROI homogène même lorsque la route est sinueuse, en outre la région d'intérêt ROI est déterminée dans ladite image I en fonction de l'angle au volant $\alpha$ du véhicule V.

Dans une première variante de réalisation non limitative :

- la région d'intérêt ROI est centrée par rapport au point de référence PR (vu précédemment) dans l'image I, lorsque l'angle au volant $\alpha$ est nul ; et
- la région d'intérêt ROI est décalée latéralement par rapport au point de référence PR dans l'image I, lorsque l'angle au volant $\alpha$ n'est pas nul. Dans un exemple non limitatif, la région d'intérêt ROI est décalée de l'angle au volant $\alpha$ fois trois.

Ainsi, lorsque l'angle au volant $\alpha$ est positif, la région d'intérêt ROI est décalée à droite sur l'image I, tandis que lorsque l'angle au volant $\alpha$ est négatif, la région d'intérêt ROI est décalée à gauche sur l'image I. Par exemple, si l'angle au volant $\alpha$ est égale à 10°, la région d'intérêt ROI est décalée de 30 pixels à droite par rapport au point de référence PR, et est donc centrée sur un nouveau point de référence de 320+30 pixels.

Dans une deuxième variante de réalisation non limitative :

- la région d'intérêt ROI est centrée par rapport au point de référence PR (vu précédemment) dans l'image I, lorsque l'angle au volant $\alpha$ est inférieur ou égal à 15° en valeur absolue ; et
- la région d'intérêt ROI est décalée latéralement par rapport au point de référence PR dans l'image I, lorsque l'angle au volant $\alpha$ est supérieur à 15° en valeur absolue. Dans un exemple non limitatif, la région d'intérêt ROI est décalée de l'angle au volant α fois trois. Ce seuil de 15° est caractéristique d'une route qui est sinueuse. Lorsque l'angle au volant α est inférieur à 15° en valeur absolue, en général, la route est en ligne droite, mais c'est le conducteur du véhicule V qui ne conduit pas droit.

Ainsi, lorsque l'angle au volant α est supérieur à +15°, la région d'intérêt ROI est décalée à droite sur l'image 1 (la direction de la route va vers la droite), tandis que lorsque l'angle au volant est inférieur à -15°, la région d'intérêt ROI est décalée à gauche sur l'image I (la direction de la route va vers la gauche).

Par exemple, si l'angle au volant α est égale à -18°, la région d'intérêt ROI est décalée de 54 pixels à gauche par rapport au point de référence PR, et est donc centrée sur un nouveau point de référence de 320-54 pixels.

Ainsi, le fait de déterminer la position de la région d'intérêt ROI (et plus particulièrement sa position par rapport à l'axe des abscisses comme décrit ci-dessus) dans l'image acquise I en fonction de l'angle au volant α, permet de prendre en compte la direction de la route et ainsi d'éviter les obstacles tels que talus, arbres, etc. se situant en face du véhicule lorsque la route est sinueuse. La région d'intérêt ROI est ainsi plus homogène.

On notera que la deuxième et la troisième sous-étapes peuvent être effectuées en parallèle le cas échéant.

**Dans une quatrième sous-étape 1d**), on détermine une courbe de niveaux de gris CL à partir de ladite région d'intérêt ROI.

L'intérêt est que la présence de brouillard F va modifier la forme de la courbe de niveaux de gris de sorte qu'en analysant cette courbe, on va pouvoir déterminer la présence de brouillard F.

Dans un mode de réalisation non limitatif, cette courbe de niveaux de gris CL est déterminée de la manière suivante. Pour chaque ligne Ln de l'image acquise I, on ne prend en compte que les pixels de la région d'intérêt ROI et on applique une combinaison de pixels Px de manière à obtenir une valeur GR pour chaque ligne, cette valeur GR étant par exemple une valeur de niveau de gris dans le cas d'une image vidéo (comme décrit plus loin).

Dans un exemple de réalisation non limitatif, la combinaison est la valeur médiane des niveaux de gris de chaque pixel Px de la ligne Ln considérée. L'avantage de la médiane est d'estimer la valeur moyenne des niveaux de gris tout en s'affranchissant des problèmes de bruits dans l'image I.

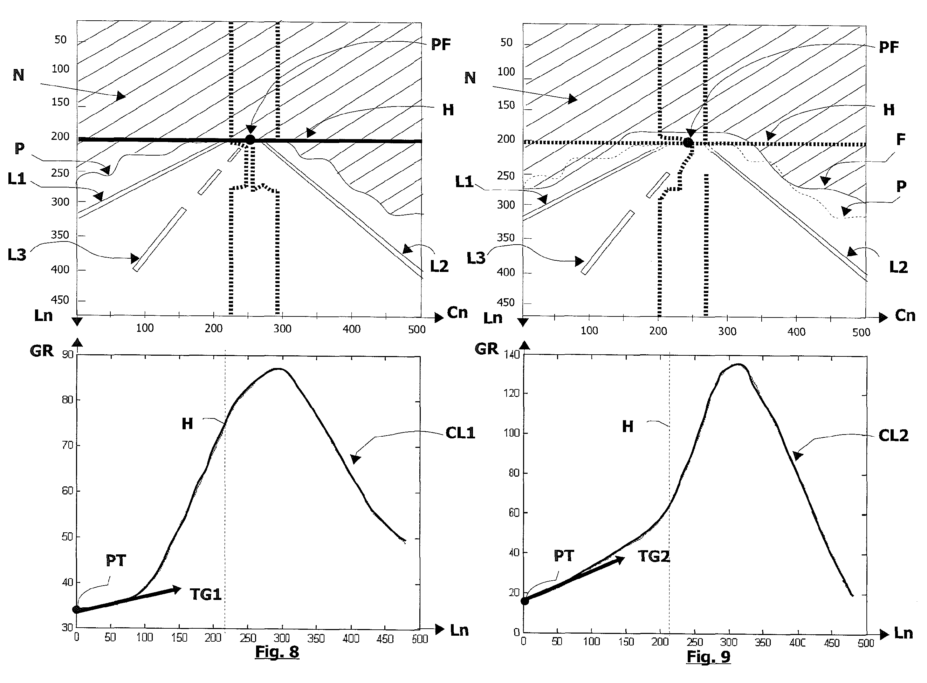

Un premier exemple de courbe de niveaux de gris CL1 est illustré sur la Fig. 8 dans le cas où il n'y a pas de brouillard F, et un deuxième exemple de courbe de niveaux de gris CL2 est illustré sur la Fig. 9 dans le cas où il existe du brouillard F.

Comme on peut le voir, pour une courbe de niveaux de gris CL, en abscisse est indiqué le numéro de ligne Ln dans l'image acquise I, tandis qu'en ordonnée est indiqué la valeur de niveau de gris GR attribué.

Sur ces deux courbes de niveaux de gris CL1 et CL2, on a également placé la ligne d'horizon H qui se trouve environ à l'abscisse 220.

On notera que dans le cas où le temps d'intégration de la caméra CAM est connu, une courbe de niveau de gris CL peut être, dans des modes de réalisation non limitatifs, soit une courbe de luminance soit une courbe de luminosité.

On rappelle que le temps d'intégration de la caméra CAM correspond au temps d'exposition à la lumière des capteurs de la caméra.

*Deuxième étape : analyse de la courbe de niveau de gris.*

Comme on va le voir ci-après, l'analyse de la courbe de gris s'effectue selon deux modes de réalisation non limitatifs, en fonction :

- d'une aire A dans ladite courbe de niveaux de gris ; ou
- d'un coefficient directeur CF d'une tangente à ladite courbe de niveaux de gris.

A partir de cette aire A ou du coefficient directeur, on en déduit l'existence d'un phénomène perturbateur F et sa densité et en conséquence s'il existe une rétrodiffusion des projecteurs PJ.

*Premier mode : en fonction d'une aire A*

Ainsi, dans un premier mode de réalisation non limitatif, l'analyse de la courbe de niveau de gris s'effectue de la manière suivante.

**Dans une cinquième sous-étape 1e**), on détermine une aire A dans ladite courbe de niveaux de gris CL en fonction du point d'intérêt H déterminé (sous-étape CALC_A(CL, H) illustrée à la Fig. 5).

Comme on va le voir, en analysant l'aire A dans cette courbe, on va pouvoir déterminer la présence de brouillard F.

Dans un mode de réalisation non limitatif, cette aire A est déterminée en fonction de la ligne d'horizon H, le point d'intérêt se situant sur la ligne d'horizon H comme vu précédemment.

Dans une première variante de réalisation non limitative, cette aire A est l'aire correspondant au haut de l'image acquise I jusqu'à la ligne d'horizon H. C'est ainsi l'aire qui est située au dessus de la ligne d'horizon H.

L'avantage de cette variante est d'obtenir une courbe de niveaux de gris de référence CL1 sans brouillard qui soit indépendante de paramètres tel que l'infrastructure de la route (type de revêtement de la route, taux d'humidité sur la route...) etc. L'aire A1 dans la courbe de référence ainsi obtenue sera ainsi proche d'une constante sans brouillard et la courbe CL1 ainsi obtenue sera ainsi stable (le haut de l'image est noir).

Comme on va le voir ci-dessous, lors de la présence de brouillard F, l'aire A2 dans la courbe de niveaux de gris CL2 étant différente de celle A1 de la courbe de niveaux de gris de référence CL1 , il sera facile d'analyser cette courbe par rapport à la courbe de référence CL1 stable pour en déduire la présence de brouillard F.

Par ailleurs, l'avantage de cette variante, est qu'il n'existe pas de diffusion de lumière au-dessus de la ligne d'horizon H, due à l'éclairage des projecteurs, en l'absence de brouillard F, alors qu'il en existe en présence de brouillard F, la diffusion de lumière étant due à la réflexion du faisceau lumineux FX des projecteurs sur les particules de brouillard F. L'analyse de la courbe de niveau de gris va permettre de mettre en exergue cette diffusion de lumière.

On notera que dans une deuxième variante de réalisation non limitative, cette aire A est l'aire correspondant au bas de l'image acquise I jusqu'à la ligne d'horizon H.

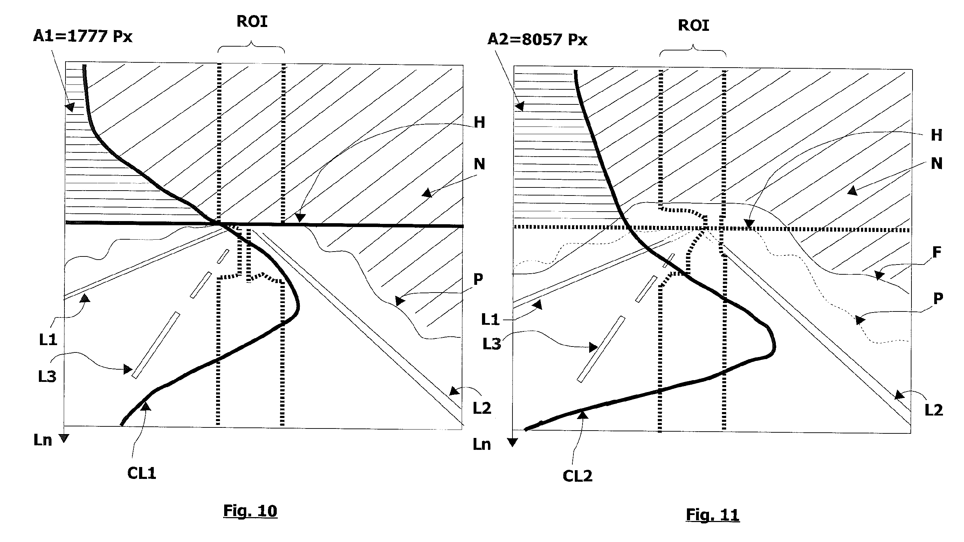

Comme on peut le voir sur les Fig. 10 et 11, des courbes de niveaux de gris CL1 et CL2 associées respectivement aux images acquises I en l'absence de brouillard F et lors de la présence de brouillard F sont superposées aux images I associées (elles ont été basculées de 90° par rapport aux exemples de courbes des Fig. 8 et 9 précédentes).

Une première aire A1 et une deuxième aire A2 associées respectivement à la première courbe de niveaux de gris CL1 et à la deuxième courbe de niveaux de gris CL2 sont illustrées (hachures horizontales) respectivement sur ces deux Fig. 10 et 11 selon la première variante de réalisation (haut de l'image).

**Dans une sixième sous-étape 1f), on déter-**mine la présence de brouillard F et sa densité (sous-étape CALC_F(VAs) illustrée à la Fig. 5).

Dans un premier mode de réalisation, on détermine la présence de brouillard F et sa densité en fonction d'au moins une valeur seuil VAs de ladite aire A.

Plus particulièrement, la présence de brouillard F et sa densité est déterminée en fonction d'une pluralité de valeurs seuils VAs qui vont permettre de définir que :

- le véhicule s'approche/s'éloigne d'une nappe de brouillard F,
- le véhicule se trouve dans le brouillard F

et d'autre part, de définir que :

- le brouillard F est de faible densité,
- le brouillard F est de densité moyenne,
- le brouillard F est de forte densité.

On notera que la densité du brouillard F est fonction d'une distance de visibilité DVM.

Ainsi, lorsque le brouillard F est de :

- faible densité, la distance de visibilité DVM correspondante se situe au-delà de 100 mètres (ente 100 et 150 mètres par exemple),
- moyenne densité, la distance de visibilité DVM correspondante se situe entre 60 mètres et 100 mètres, et
- forte densité, la distance de visibilité DVM correspondante est de moins de 60 mètres.

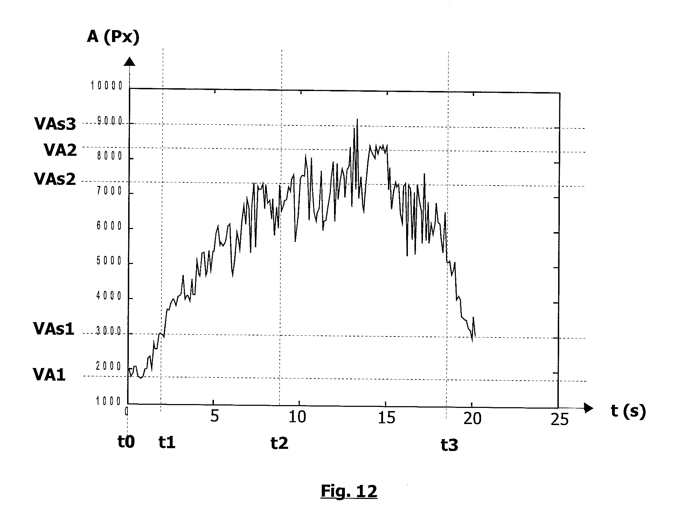

La Fig. 12 illustre un exemple non limitatif d'une variation de l'aire A déterminée dans une courbe de niveaux de gris au cours du temps, c'est-à-dire sur une séquence SQ d'images I acquises.

En abscisse est représenté le temps en secondes, et en ordonnée l'aire A en pixels.

Au temps t0 = 0, la valeur de l'aire A correspond à l'absence de brouillard. On a représenté dans un exemple non limitatif, la valeur VA1 équivalente à 1777 pixels qui correspond à l'aire A1 dans la courbe de niveaux de gris de référence CL1 sans brouillard F représentée précédemment à la Fig. 10.

Au fur et à mesure de l'acquisition des images, la valeur de l'aire A change en fonction des variations de l'atmosphère environnante autour du véhicule et également de l'atmosphère devant le véhicule, et donc en fonction de la présence ou non de brouillard F dans lequel se trouve le véhicule ou dans lequel va entrer le véhicule.

Ainsi, on peut voir qu'entre les temps t0 et t1 , la valeur de l'aire A augmente et devient supérieure à une première valeur seuil VAs1 . On en déduit que l'on entre dans une zone de brouillard F au temps t1.

Le véhicule V ne se trouve pas encore dans le brouillard, mais détecte qu'il approche du brouillard F.

Ainsi, les variations progressive de l'aire A permettent de détecter qu'il existe une nappe de brouillard au loin dans laquelle on va entrer. On anticipe donc la détection de brouillard F et ce grâce à la caméra avant.

Dans un exemple non limitatif, la première valeur seuil VAs1 est égale à 3000. En deçà de cette valeur, on estime que l'on est en présence de bruit.

Entre les temps t2 et t3, la valeur de l'aire A est supérieure à une deuxième valeur seuil VAs2 caractéristique du brouillard F.

Le véhicule V se trouve ainsi dans la nappe de brouillard F.

Dans un exemple non limitatif, cette valeur VAs se situe autour de 7000 pixels et correspond à un brouillard de moyenne densité.

La valeur VA2 équivalente à 8057 pixels par exemple correspond à l'aire A2 dans la courbe de niveaux de gris CL2 avec brouillard F représentée précédemment dans la Fig. 11 se situe ainsi au delà de ce deuxième seuil VAs2.

Au-delà du temps t3, la valeur de l'aire A redevient inférieure à la valeur seuil VAs2 et diminue progressivement. On en déduit que l'on sort de la zone de brouillard F

Une troisième valeur seuil VAs3 est utilisée pour définir que le brouillard F dans lequel se trouve le véhicule V est de forte densité. Dans un exemple de réalisation non limitatif, cette troisième valeur seuil VAs3 est supérieure à 9000 pixels.

Dans un deuxième mode de réalisation, on détermine la présence de brouillard F et sa densité en fonction d'une distance de visibilité DVM, cette dernière étant déterminée en fonction de l'aire déterminée A précédemment (sous-étape CALC_DVM(A) illustrée à la Fig. 5).

Dans un mode de réalisation non limitatif, lorsque l'aire A utilisée correspondant au haut de l'image acquise I jusqu'à la ligne d'horizon H, la relation entre la distance de visibilité DVM et l'aire déterminée A est égale à :

$$DVM = 275 - A*15/600. \ [1]$$

On notera que dans ce cas, cette relation [1] ne dépend pas du type de bitume, de la qualité de la route, ou tout autre caractéristique de la route, comme expliqué précédemment.

Bien entendu, d'autres coefficients peuvent être utilisés.

Selon la distance de visibilité DVM ainsi calculée, on en déduit la présence de brouillard F, et sa densité.

Ainsi, dans un exemple non limitatif, lorsque la distance de visibilité est inférieure à 150 mètres, on peut en déduire qu'il existe du brouillard F.

Par ailleurs, en ce qui concerne la densité, lorsque la distance de visibilité est inférieure à 60 mètres, on peut en déduire que la brouillard F est de forte densité, tandis que lorsqu'elle est supérieure à 60 mètres et au-delà, on peut en déduire que le brouillard F est de moyenne (60-100 mètres) à faible densité (100-150 mètres).

Le calcul de la distance de visibilité DVM permet ainsi de fournir par la suite au conducteur du véhicule V une information sur la vitesse maximale Vmax à ne pas dépasser pour ne pas être en danger, et garantir ainsi une distance de sécurité optimale. Dans un exemple non limitatif, pour une vitesse de 90 km/h, on sait que la distance d'arrêt est d'environ 80 mètres.

Bien entendu, on peut également combiner ces deux modes (utilisation des seuils VAs et calcul de la distance de visibilité DVM), soit en parallèle, soit l'un après l'autre.

Après avoir vu ci-dessus le premier mode de réalisation utilisant l'aire A d'une courbe de niveau de gris, on décrit ci-après le deuxième mode de réalisation utilisant un coefficient directeur CF d'une tangente.

*Deuxième mode : en fonction d'un coefficient directeur CF*

Dans un deuxième mode de réalisation non limitatif, l'analyse de la courbe de niveau de gris s'effectue de la manière suivante, telle qu'illustrée sur la Fig. 5, 13, 14 et 15.

**Dans un cinquième sous-étape 1e**), on calcule au moins une tangente TG à partir d'un point d'intérêt PT dans ladite courbe de niveaux de gris CL (sous-étape CALC_TG(CL, PR) illustrée à la Fig. 5).

Dans un mode de réalisation non limitatif, le point d'intérêt PT est un point caractéristique d'un début de diffusion de lumière au dessus de la coupure d'un faisceau lumineux FX émis par des projecteurs PJ du véhicule V en présence du brouillard F.

En effet, en présence de brouillard F, la courbe de niveaux de gris CL2 va varier de façon significative à partir de ce point d'intérêt PT par rapport à la courbe de référence CL1 sans brouillard F.

On se base sur le fait qu'en l'absence de brouillard F, il n'existe pas de diffusion de lumière au dessus de la coupure du faisceau lumineux FX émis par les projecteurs PJ, alors qu'il en existe en présence de brouillard F, cette diffusion étant en effet due à la réflexion du faisceau lumineux FX des projecteurs PJ sur les particules de brouillard F. On rappelle que la coupure du faisceau lumineux FX est de l'ordre de -1% en dessous de la ligne d'horizon.

Dans une variante de réalisation de ce mode, le point d'intérêt PT se trouve au dessus de la ligne d'horizon H de l'image acquise 1. Cela permet d'être indépendant des caractéristiques de la route (sol, route mouillée etc) et de manière générale de la scène routière (arbre, talus). En effet, la partie haute de l'image I se trouvant au-dessus de cette ligne H est moins dépendante de la scène routière.

Dans un exemple non limitatif de cette variante, le point d'intérêt PT est l'origine de la courbe. En effet, le point à l'origine de la courbe de niveaux de gris CL se trouve au dessus de la ligne d'horizon H comme illustré à la Fig. 14.

L'avantage de cet exemple, est qu'il n'existe pas de diffusion de lumière au-dessus de la ligne d'horizon H, due à l'éclairage des projecteurs, en l'absence de brouillard F, alors qu'il en existe en présence de brouillard F comme vu précédemment.

L'analyse de la courbe de niveau de gris, et notamment du coefficient directeur passant par la tangente en ce point d'intérêt va permettre de mettre en exergue cette diffusion de lumière.

**Dans une sixième sous-étape 1f**), on détermine le coefficient directeur CF, appelé également pente, à partir de ladite tangente TG (sous-étape CALC_CF(TG) illustrée à la Fig. 5).

Comme on va le voir en détail ci-après, le coefficient directeur CF est caractéristique d'un changement de l'environnement de l'atmosphère autour du véhicule V. De plus, à partir de ce coefficient directeur CF, on va pouvoir calculer une distance de visibilité DVM.

Ainsi, le coefficient directeur CF va permettre de constater la présence de brouillard F et de déduire sa densité, soit directement au moyen de valeurs seuils, soit via la distance de visibilité DVM comme décrit ci-après.

**Dans une septième sous-étape 1g**), on détermine la présence de brouillard F et sa densité.

Dans un premier mode de réalisation, on détermine la présence de brouillard F et sa densité en fonction de plusieurs valeurs seuils VS dudit coefficient directeur CF (sous-étape CALC_F(VS) illustrée à la Fig. 5).

Comme on va le voir, en analysant le coefficient directeur CF, on va pouvoir déterminer la présence de brouillard F et sa densité.

Plus particulièrement, la présence de brouillard est déterminée en fonction d'une valeur seuils VS. Par exemple, cette valeur est de 0.15 pour l'exemple non limitatif pris des projecteurs en position code.

En effet, lorsqu'il existe du brouillard F, on peut remarquer que le coefficient directeur CF de la tangente TG de la courbe de niveaux de gris CL a un gradient significatif (Fig. 9) par rapport à celui où le brouillard F est absent (Fig. 8).

Ainsi, en ce qui concerne la présence de brouillard F, lorsque le coefficient directeur CF est supérieur ou égal à un premier seuil VS1, on en déduit la présence de brouillard F. Dans un mode de réalisation non limitatif, ce premier seuil VS1 est égal à 0,15.

En dessous de ce seuil, le brouillard F n'est pas perceptible dans l'image 1.

De plus, on peut également remarquer que lorsqu'il existe du brouillard, plus le brouillard F est dense, plus le coefficient directeur CF augmente.

On va ainsi pouvoir également déterminer la densité de brouillard F au moyen du coefficient directeur CF.

On utilise à cet effet deux autres seuils VS2 et VS3 correspondant chacun respectivement à une densité moyenne et forte de brouillard F. Dans un mode de réalisation non limitatif :

- le premier seuil VS1 = 0,15 (entre ce seuil et le deuxième seuil VS2, on en déduit que le brouillard est faiblement dense).
- le deuxième seuil VS2 = 0,46 (entre ce seuil et le troisième seuil VS3, on en déduit que le brouillard est moyennement dense) ; et
- le troisième seuil VS3 = 0,77 (au delà de ce seuil, on en déduit que le brouillard est très dense).

On notera que la densité du brouillard F est fonction d'une distance de visibilité DVM.

Ainsi, lorsque le brouillard F est de :

- faible densité, la distance de visibilité DVM correspondante se situe au-delà de 100 mètres (ente 100 et 150 mètres par exemple),
- moyenne densité, la distance de visibilité DVM correspondante se situe entre 60 mètres et 100 mètres, et
- forte densité, la distance de visibilité DVM correspondante est de moins de 60 mètres.

Dans un deuxième mode de réalisation, on détermine la présence de brouillard F et sa densité en fonction d'une distance de visibilité DVM, cette dernière étant déterminée en fonction du coefficient directeur CF (sous-étape CALC_DVM(CF) illustrée à la Fig. 5).

Dans un mode de réalisation non limitatif, la relation entre la distance de visibilité DVM et le coefficient directeur CF est égale à :

$$DVM = 61.5 - 75 * CF \quad [1]$$

On notera que dans ce cas, cette relation [1] ne dépend pas du type de bitume, de la qualité de la route, ou tout autre caractéristique de la route comme décrit précédemment.

De plus, cette relation [1] est indépendante du tangage du véhicule V (tangage dû au freinage ou à une accélération), car elle ne dépend pas de la ligne d'horizon H.

En effet, lorsqu'il existe un tel tangage, le point d'intérêt PT déterminé est uniquement translaté dans l'image acquise I par rapport à l'image précédente sans tangage, (vers le haut quand le véhicule freine, et vers le bas quand le véhicule accélère).

Il n'est donc pas besoin de prendre en compte ce tangage dans le calcul de la distance de visibilité DVM.

Bien entendu, d'autres coefficients peuvent être utilisés.

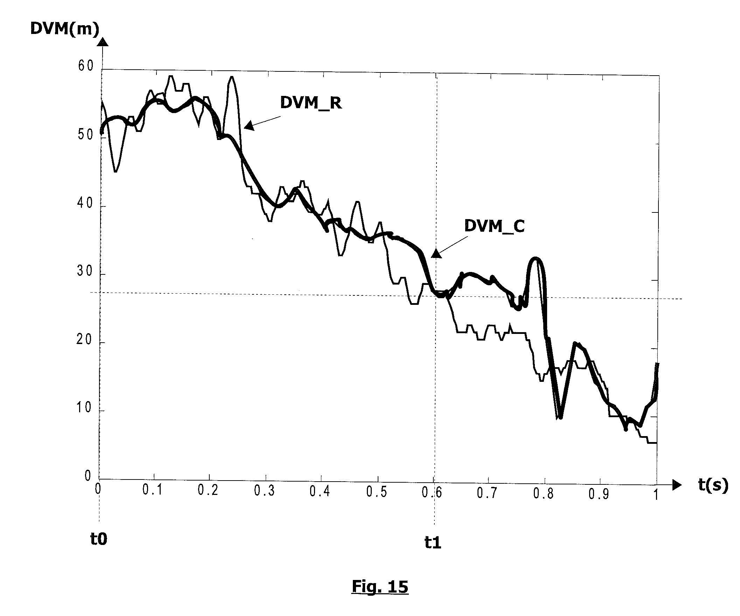

La Fig. 15 illustre un exemple non limitatif de variations de la distance de visibilité DVM (en ordonnée en mètres) en fonction du temps (en abscisse en secondes).

La première courbe DVM_R concerne des données empiriques de la distance de visibilité qui ont été relevées au cours du temps lors de tests réels.

La deuxième courbe DVM_C concerne la distance de visibilité DVM calculée selon la relation [1] au cours du temps.

On remarque que la deuxième courbe DVM_C est très proche de la première courbe DVM_R. Ainsi, le calcul de la distance de visibilité en fonction du coefficient directeur CF selon la relation [1] est un indicateur fiable qui permet de donner des valeurs fiables de la distance de visibilité DVM par rapport à la distance de visibilité réelle.

Par ailleurs, on peut voir, que la distance de visibilité DVM diminue au cours du temps. On est ainsi entré dans une nappe de brouillard de faible densité à t0=0 (CF = 0,15 et DVM = 50,25 et le brouillard F devient moyennement dense au bout d'environ t1=0,6 secondes (CF = 0,46 et DVM = 27).

Selon la distance de visibilité DVM ainsi calculée, on peut ainsi également en déduire la présence de brouillard F et sa densité.

Ainsi, dans un exemple non limitatif lorsque la distance de visibilité est inférieure à 150 mètres, on peut en déduire qu'il existe du brouillard F.

Par ailleurs, en ce qui concerne la densité, lorsque la distance de visibilité est inférieure à 60 mètres, on peut en déduire que la brouillard F est de forte densité, tandis que lorsqu'elle est supérieure à 60 mètres et au-delà, on peut en déduire que le brouillard F est de moyenne (60-100 mètres) à faible densité (100-150 mètres).

De plus, le calcul de la distance de visibilité DVM permet de fournir par la suite au conducteur du véhicule V une information sur la vitesse maximale Vmax à ne pas dépasser pour ne pas être en danger, et garantir ainsi une distance de sécurité optimale. Dans un exemple non limitatif, pour une vitesse de 90 km/h, on sait que la distance d'arrêt est d'environ 80 mètres.

Bien entendu, on peut également combiner ces deux modes de réalisation (utilisation des seuils VS et calcul de la distance de visibilité DVM) afin d'affiner la détection du brouillard F et le calcul de sa densité, soit en parallèle, soit l'un après l'autre.

Bien entendu, d'autres modes de réalisation peuvent être effectués pour détecter une rétrodiffusion sur un phénomène perturbateur de visibilité.

**Dans une deuxième étape 2),** on augmente la portée d'éclairage B du faisceau lumineux FX par rapport à une portée maximum autorisée BM en fonction de la rétrodiffusion détectée.

On notera que la portée maximum autorisée BM correspond à l'éclairage réglementaire autorisé pour des projecteurs en position code et est définie dans la réglementation européenne concernant l'éclairage pour des projecteurs Directive 97/28/CE de la commission du 11 Juin 1997.

L'augmentation de la portée d'éclairage est décrite ci-après plus en détail selon trois modes de réalisation non limitatifs : en fonction du premier mode de réalisation et des deux variantes du deuxième mode de réalisation de détection de la rétrodiffusion décrits précédemment lors de la première étape, à savoir :

- mesure de distance de visibilité ;
- analyse d'une courbe de niveau de gris en fonction de l'aire ; et
- analyse d'une courbe de niveau de gris en fonction du coefficient directeur.

Premier mode de réalisation

Ainsi, selon ce mode, on augmente la portée d'éclairage B du faisceau lumineux FX par rapport à une portée maximum autorisée BM des projecteurs PJ de manière à pouvoir mesurer la distance de visibilité D jusqu'à un premier seuil de visibilité S1 si la distance de visibilité D est supérieure à un deuxième seuil de visibilité S2.

On notera que lorsque la rétrodiffusion diminue, la distance de visibilité D augmente.

Le deuxième seuil de visibilité S2 est défini de manière à garantir que l'augmentation de la portée d'éclairage B est suffisante pour réaliser une mesure de distance de visibilité D jusqu'au premier seuil de visibilité S1.

C'est le seuil qui correspond à une modification du mode d'éclairage des projecteurs PJ.

Comme on va le voir plus loin, lorsque la distance de visibilité D passe en dessous du deuxième seuil de visibilité S2, la portée correspond à celle des codes réglementés. Au dessus, la portée doit être régulée pour optimiser la rétrodiffusion pouvant gêner le conducteur et également permettre la mesure de la distance de visibilité.

En effet, dès que la distance de visibilité D dépasse ce deuxième seuil de visibilité S2, l'augmentation de la portée d'éclairage B des projecteurs PJ est déclenchée et dure tant que la distance de visibilité D est inférieure au premier seuil de visibilité S1. Ce premier seuil de visibilité S1 est le seuil de commutation automatique de la position code, avec portée augmentée, en position route, comme on va le voir par la suite.

Dans un exemple non limitatif, ce premier seuil de visibilité S1 est égal à 70 mètres. S2 égal à 40 mètres.

Dans un autre exemple non limitatif, le premier seuil de visibilité S1 est égal à 100 mètres. S2 égal à 50 mètres.

Dans une première variante de réalisation non limitative, l'augmentation de la portée d'éclairage B s'effectue par paliers (étape ADJUST_B(P1) sur la Fig. 2).

Comme on peut le voir sur l'exemple donné dans le diagramme de la Fig. 16 :

- entre les temps t2 et t5, les projecteurs sont en position code sans portée augmentée MOD_C1, c'est-à-dire avec la portée maximum autorisée BM. Dans la suite de la description, on appellera également cette position code sans portée augmentée, position réglementée ;
- au temps t5, lorsque la distance de visibilité D devient supérieure au deuxième seuil de visibilité S2, la portée est augmentée d'un premier palier P1. Dans un exemple non limitatif, le deuxième seuil de visibilité S2 est égal à 50 mètres.

Ce premier palier P1 est défini de manière à permettre la mesure de la distance de visibilité jusqu'au premier seuil de visibilité S1. Les projecteurs PJ sont toujours en position code mais avec une portée augmentée MOD_C2.

On notera que l'on peut bien entendu utiliser un nombre de paliers supérieur, chacun permettant une mesure de distance de visibilité plus importante, le dernier palier permettant une mesure jusqu'au premier seuil de visibilité S1 .

Dans une deuxième variante de réalisation non limitative, l'augmentation de la portée d'éclairage B du faisceau lumineux FX des projecteurs PJ s'effectue de façon continue, et dans un exemple non limitatif en fonction de la distance de visibilité D mesurée (étape ADJUST_B(D) de la Fig. 2).

Comme on peut le voir sur l'exemple donné dans le diagramme de la Fig. 17 :

- entre les temps t2 et t5, les projecteurs sont en position code sans portée augmentée MOD_C1 , c'est-à-dire avec la portée maximum autorisée BM ;
- au temps t5, lorsque la distance de visibilité D devient supérieure au deuxième seuil de visibilité S2, au fur et à mesure que la distance de visibilité D augmente, la portée d'éclairage B est augmentée linéairement de façon à atteindre la portée augmentée MOD_C2 lorsque la distance de visibilité atteint la valeur du premier seuil de visibilité S1 .

Dans un exemple non limitatif, le deuxième seuil de visibilité S2 est égal à 50 mètres.

Ainsi, la portée d'éclairage B est augmentée progressivement tant que la distance de visibilité D se situe en dessous du premier seuil de visibilité S1. Les projecteurs PJ sont toujours en position code mais avec une portée augmentée MOD_C2.

Cela a pour avantage d'être moins perturbateur pour le conducteur et plus agréable pour l'oeil du conducteur (qu'une solution tout ou rien par paliers où le conducteur observe des oscillations de ces feux entre les modes position code réglementée, position code augmentée, et position route).

Il en est de même pour l'exemple de la Fig. 18, au temps t5 également.

Ainsi, comme on peut le voir sur l'organigramme de la Fig. 2, la deuxième étape 2) comporte les sous-étapes :

- 2a) de comparaison de la distance de visibilité D (étape COMP_D) avec le deuxième seuil de visibilité S2 (étapes 2ai, 2aii), et le premier seuil de visibilité S1 (étapes 2aiii, 2aii) ; et
- 2b) d'augmentation de la portée d'éclairage B :

  - 2bi) par paliers selon la première variante de réalisation (étape ADJUST_B(P1));
  - 2bii) progressivement en fonction de la distance de visibilité mesurée D selon la deuxième variante de réalisation (étape ADJUST_B(D)).

<u>Deuxième mode de réalisation</u>

Ainsi, selon ce mode, on augmente la portée d'éclairage B du faisceau lumineux FX par rapport à une portée maximum autorisée BM des projecteurs PJ de manière à pouvoir mesurer l'aire A dans ladite courbe de niveaux de gris si l'aire A atteint une deuxième valeur seuil de surface SA2.

On notera que lorsque la rétrodiffusion diminue, l'aire A diminue.

Le deuxième seuil de surface SA2 est défini de manière à garantir que l'augmentation de la portée d'éclairage B est suffisante pour réaliser une mesure de l'aire A.

C'est le seuil qui correspond à une modification du mode d'éclairage des projecteurs PJ.

Lorsque l'aire A se trouve au dessus du deuxième seuil de surface SA2, la portée correspond à celle des codes réglementés. Dès que l'aire A atteint le deuxième seuil SA2, la portée doit être régulée pour optimiser la rétrodiffusion pouvant gêner le conducteur et également permettre la mesure de l'aire A, tel qu'illustré sur la Fig. 19. Dans l'exemple non limitatif, l'aire A a diminué car le brouillard F s'est atténué.

En effet, au temps t5, dès que l'aire A atteint ce deuxième seuil de surface SA2, l'augmentation de la portée d'éclairage B des projecteurs PJ est déclenchée, tel qu'illustré sur la Fig. 19. L'augmentation de la portée d'éclairage en fonction de l'aire A mesurée s'effectue de manière à pouvoir mesurer l'aire A jusqu'à un premier seuil de surface SA1 si l'aire mesurée avant augmentation de la portée d'éclairage atteint un deuxième seuil de surface SA2. Ce premier seuil de surface SA1 est le seuil de commutation automatique de la position code, avec portée augmentée, en position route.

Par ailleurs, on notera que le passage de la position code réglementée MOD_C1 à la position code avec portée augmentée MOD_C2 va augmenter la valeur de la surface d'un coup, tel qu'illustré sur la Fig. 19. La Fig. 19 montre l'évolution de l'aire A de la courbe à chaque instant.

Dans un exemple non limitatif, ce deuxième seuil de surface SA2 est égal à 3000, le premier seuil de surface SA1 est égal à 4000 et le troisième à 6000.

Dans une première variante de réalisation non limitative, l'augmentation de la portée d'éclairage B s'effectue par paliers (étape ADJUST_B(P1) sur la Fig. 3).

Dans une deuxième variante de réalisation non limitative, l'augmentation de la portée d'éclairage B du faisceau lumineux FX des projecteurs PJ s'effectue de façon continue, et dans un exemple non limitatif en fonction de l'aire A mesurée (étape ADJUST_B(A) de la Fig. 3).

Ainsi, comme on peut le voir sur l'organigramme de la Fig. 3, la deuxième étape 2) comporte les sous-étapes :

- 2a) de comparaison de l'aire A (étape COMP_A) avec le deuxième seuil de surface SA2 (étapes 2ai, 2aii), et le premier seuil de surface SA1 (étapes 2aiii, 2aii) ; et
- 2b) d'augmentation de la portée d'éclairage B :

  - 2bi) par paliers selon la première variante de réalisation (étape ADJUST_B(P1));
  - 2bii) progressivement en fonction de l'aire mesurée A selon la deuxième variante de réalisation (étape ADJUST_B(A)).

## Troisième mode de réalisation

Ainsi, selon ce mode, on augmente la portée d'éclairage B du faisceau lumineux FX par rapport à une portée maximum autorisée BM des projecteurs PJ de manière à pouvoir mesurer un coefficient directeur CF d'au moins une tangente dans ladite courbe si le coefficient atteint une deuxième valeur seuil d'inclinaison SC2.

On notera que lorsque la rétrodiffusion diminue, le coefficient directeur diminue.

La deuxième valeur seuil d'inclinaison SC2 est défini de manière à garantir que l'augmentation de la portée d'éclairage B est suffisante pour réaliser une mesure du coefficient directeur CF.

C'est le seuil qui correspond à une modification du mode d'éclairage des projecteurs PJ.

Lorsque le coefficient directeur CF se trouve au dessus du deuxième seuil d'inclinaison SC2, la portée correspond à celle des codes réglementés. Dès que le coefficient directeur CF atteint ce deuxième seuil d'inclinaison SC2, la portée doit être régulée pour optimiser la rétrodiffusion pouvant gêner le conducteur et également permettre la mesure du coefficient directeur CF. L'exemple de la Fig. 19 du deuxième mode décrit ci-dessus peut être transposé à ce troisième mode.

En effet, dès que le coefficient directeur CF atteint ce deuxième seuil d'inclinaison SC2, l'augmentation de la portée d'éclairage B des projecteurs PJ est déclenchée. L'augmentation de la portée d'éclairage en fonction du coefficient directeur mesurée s'effectue de manière à pouvoir mesurer le coefficient directeur jusqu'à un premier seuil d'inclinaison SC1 si le coefficient directeur mesuré avant augmentation de la portée d'éclairage atteint un deuxième seuil SC2. Ce premier seuil d'inclinaison SC1 est le seuil de commutation automatique de la position code, avec portée augmentée, en position route.

Dans un exemple non limitatif, ce deuxième seuil d'inclinaison SC2 est égal à 0.3, le premier seuil d'inclinaison SC1 est égal à 0.5 et le troisième à 0,95.

Dans une première variante de réalisation non limitative, l'augmentation de la portée d'éclairage B s'effectue par paliers (étape ADJUST_B(P1) sur la Fig. 4).

Dans une deuxième variante de réalisation non limitative, l'augmentation de la portée d'éclairage B du faisceau lumineux FX des projecteurs PJ s'effectue de façon continue, et dans un exemple non limitatif en fonction du coefficient directeur CF mesuré (étape ADJUST_B(CF) de la Fig. 4).

Ainsi, comme on peut le voir sur l'organigramme de la Fig. 4, la deuxième étape 2) comporte les sous-étapes :

- 2a) de comparaison du coefficient directeur CF (étape COMP_CF) avec le deuxième seuil d'inclinaison SC2 (étapes 2ai, 2aii), et le premier seuil d'inclinaison SC1 (étapes 2aiii, 2aii) ; et
- 2b) d'augmentation de la portée d'éclairage B :

- 2bi) par paliers selon la première variante de réalisation (étape ADJUST_B(P1));
- 2bii) progressivement en fonction de le coefficient directeur CF mesuré selon la deuxième variante de réalisation (étape ADJUST_B(CF)).

Par ailleurs, on notera que dans un mode de réalisation non limitatif applicable aux trois modes de réalisation décrits ci-dessus, la portée d'éclairage B du faisceau lumineux FX des projecteurs PJ est ajustée en fonction d'un obstacle O se situant dans l'environnement avant du véhicule automobile considéré V.

Cela permet d'éviter d'éblouir un véhicule venant en face (véhicule croisé) du véhicule considéré V ou qui est suivi (véhicule suivi) par le véhicule considéré V.

Ainsi, lorsque les projecteurs PJ se trouvent en position code avec portée augmentée MOD_C2 et lorsqu'il existe un obstacle tel qu'un véhicule croisé, soit on rediminue progressivement la portée d'éclairage B du faisceau lumineux FX, soit on repasse en position code sans portée augmenté MOD_C1.

Dans une variante non limitative, la portée d'éclairage B est ajustée lors de l'augmentation de la portée d'éclairage B du faisceau lumineux FX des projecteurs de sorte à ce que le faisceau lumineux FX comporte une ligne de coupure qui est positionnée en dessous d'un axe déterminé d'un obstacle se situant devant le véhicule automobile. En pratique cet axe représente l'axe horizontal passant par les yeux d'un conducteur du véhicule automobile se situant devant le véhicule automobile considéré, qu'il soit un véhicule croisé ou un véhicule suivi par le véhicule automobile considéré.

**Dans une troisième étape 3),** on autorise la commutation automatique des projecteurs PJ du premier mode d'éclairage MOD_C vers le deuxième mode d'éclairage MOD_R lorsque la rétrodiffusion atteint le premier seuil déterminé T1. (étape ON_COM1 illustrée sur les Fig. 1 à 4).

Cela va permettre par la suite une commutation automatique des projecteurs PJ du mode position code en mode position route si le véhicule automobile se trouve dans un environnement non éclairé, par exemple dans la campagne, et sans qu'il y ait de véhicule en face (croisé ou suivi).

Cette étape est décrite ci-après selon les trois modes de réalisation non limitatifs décrits précédemment lors de la première étape (mesure de distance de visibilité, aire, coefficient directeur).

## Premier mode de réalisation

Ainsi, selon ce premier mode, on autorise la commutation automatique des projecteurs PJ du mode position code vers le mode position route lorsque la distance de visibilité D atteint le premier seuil de visibilité S1 et en particulier lorsqu'elle devient supérieure (étape ON_COM1 illustrée sur la Fig. 2) (et que les projecteurs PJ sont en position code avec portée augmentée).

Dans ce mode le premier seuil de visibilité S1 est égal au premier seuil déterminé T1.

La distance de visibilité D étant supérieure au premier seuil de visibilité S1, il n'y a plus de risque que le conducteur du véhicule automobile V soit gêné par une rétrodiffusion du faisceau lumineux FX des projecteurs PJ sur le brouillard, si ce dernier existe toujours. On peut donc autoriser la commutation en position route car cette dernière ne sera plus gênante pour le conducteur si elle est effectuée.

On rappelle que le premier seuil de visibilité S1 est le seuil de commutation automatique de la position code avec portée augmentée en position route. C'est donc le seuil de distance de visibilité qui garantit que le conducteur du véhicule automobile V ne sera pas gêné par la rétrodiffusion du brouillard en position route.

Comme on peut le voir sur les exemples des Fig. 16 et Fig. 17, au temps t6, la distance de visibilité D atteint le premier seuil de visibilité S1 et passe au dessus. Le brouillard s'est totalement dissipé ou presque. A ce moment, on autorise la commutation du mode d'éclairage des projecteurs PJ du véhicule automobile de la position code MOD_C2 avec portée augmentée en position route MOD_R (feux de route allumés ou plein phare). Il en est de même pour l'exemple de la Fig. 18, au temps t7.

Deuxième mode de réalisation

Ainsi, selon ce deuxième mode, on autorise la commutation automatique des projecteurs PJ du mode position code vers le mode position route lorsque l'aire A mesurée atteint la première valeur seuil de surface SA1 (étape ON_COM1 illustrée sur la Fig. 3) (et que les projecteurs PJ sont en position code avec portée augmentée), tel qu'illustré à la Fig. 19.

Dans ce mode le premier seuil de surface SA1 est égal au le premier seuil déterminé T1 .

Troisième mode de réalisation

Ainsi, selon ce troisième mode, on autorise la commutation automatique des projecteurs PJ du mode position code vers le mode position route lorsque le coefficient directeur CF mesuré atteint la première valeur seuil d'inclinaison SC1 (étape ON_COM1 illustrée sur la Fig. 4) (et que les projecteurs PJ sont en position code avec portée augmentée).

Dans ce mode le premier seuil d'inclinaison SC1 est égal au le premier seuil déterminé T1 .

L'exemple de la Fig. 19 du deuxième mode décrit ci-dessus peut être transposé à ce troisième mode.

**Dans une quatrième étape 4),** on effectue une commutation des projecteurs PJ dans un deuxième mode d'éclairage MOD_R, à savoir dans l'exemple pris, dans le mode position route, lorsque la rétrodiffusion atteint un premier seuil déterminé T1 .

Le premier seuil T1 est déterminé de manière à ce que la visibilité dans le deuxième mode d'éclairage MOD_R soit supérieure à la visibilité dans le premier mode d'éclairage MOD_C.

Dans un mode de réalisation non limitatif, la position route est en outre déclenchée lorsque le véhicule automobile se trouve dans un environnement non éclairé, par exemple en rase campagne, et sans qu'il y ait de véhicule en face (croisé ou suivi).

Des méthodes connues de l'homme du métier sont utilisées pour vérifier si l'environnement du véhicule automobile est éclairé ou non, telles que dans des exemples non limitatifs, des méthodes qui utilisent une camera. La mesure de l'environnement lumineux peut se déterminer soit par l'intermédiaire du temps d'intégration de la camera qui dépasse un certain seuil ou bien par le calcul de la valeur moyenne de l'intensité lumineuse de l'image qui dépasse un certain seuil.

De même, des méthodes connues de l'homme du métier utilisant une caméra vidéo ou des capteurs de détection tels qu'un lidar ou radar sont utilisées pour vérifier s'il existe un véhicule croisé ou suivi devant le véhicule automobile considéré.

Cette étape est décrite ci-après selon les trois modes de réalisation non limitatifs décrits précédemment lors de la première étape (mesure de distance de visibilité, aire, coefficient directeur).

Premier mode de réalisation

Ainsi, selon ce mode, on effectue une commutation des projecteurs PJ dans un deuxième mode d'éclairage MOD_R, à savoir dans l'exemple pris, dans le mode position route, lorsque la distance de visibilité D atteint le premier seuil de visibilité S1 et en particulier lorsqu'elle devient supérieure. Dans ce mode, le premier seuil de visibilité S1 est égal au premier seuil déterminé T1 .

Sur les exemples des Fig. 16 à 18, comme on peut le voir au temps t6, les projecteurs PJ sont en position route MOD_R et la distance de visibilité D devient supérieure au premier seuil de visibilité S1.

Deuxième mode de réalisation

Ainsi, selon ce mode, on effectue une commutation des projecteurs PJ dans un deuxième mode d'éclairage MOD_R, à savoir dans l'exemple pris, dans le mode position route, lorsque l'aire mesurée A atteint le premier seuil de surface SA1, tel qu'illustré à la Fig. 19 au temps t6. Dans ce mode, le premier seuil de surface SA1 est égal au premier seuil déterminé T1.

Troisième mode de réalisation

Ainsi, selon ce mode, on effectue une commutation des projecteurs PJ dans un deuxième mode d'éclairage MOD_R, à savoir dans l'exemple pris, dans le mode position route, lorsque le coefficient directeur mesuré atteint le premier seuil d'inclinaison SC1. Dans ce mode, le premier seuil d'inclinaison SC1 est égal au premier seuil déterminé T1 .

L'exemple de la Fig. 19 du deuxième mode décrit ci-dessus peut être transposé à ce troisième mode.

**Dans une cinquième étape 5),** on détecte la rétrodiffusion du faisceau lumineux FX des projecteurs PJ sur un phénomène perturbateur de visibilité (étape DETECT_R de la Fig. 1) lorsque les projecteurs sont dans le deuxième mode MOD_R.

Cela va permettre de savoir si l'on se trouve en présence d'un phénomène perturbateur de visibilité F ou non dans ce deuxième mode MOD_R. S'il n'existe pas de rétrodiffusion, il n'existe plus de phénomène perturbateur de visibilité F.

On se référera à la première étape pour les différents modes de réalisation non limitatifs permettant de détecter la rétrodiffusion.

**Dans une sixième étape 6),** on interdit la commutation automatique des projecteurs PJ du mode position code vers le mode position route (étape OFF_COM1 illustrée sur les Fig. 1 à 4) lorsque la rétrodiffusion détectée atteint un troisième seuil T3.

Cette étape est décrite ci-après selon les trois modes de réalisation non limitatifs décrits précédemment lors de la première étape (mesure de distance de visibilité, aire, coefficient directeur).

Premier mode de réalisation

Lorsque la distance de visibilité D atteint un troisième seuil de visibilité S3, comme on va le voir ci-après, le brouillard provoque une gêne pour le conducteur pouvant le mettre en danger. Dans ces conditions, il est donc important que la commutation code-route soit inhibée. En effet, dans le cas contraire, les projecteurs PJ resterait en position route si aucun véhicule ne se trouve dans l'environnement avant du véhicule automobile V mettant le conducteur dans une situation à risque ou alors l'obligeant à désactiver lui même la commutation pouvant amener à une perturbation de sa conduite.

Deuxième mode de réalisation

Les mêmes remarques que celles décrites ci-dessus pour le premier mode sont à appliquer ici lorsque l'aire mesurée A atteint un troisième seuil de surface SA3.

Troisième mode de réalisation

Les mêmes remarques que celles décrites ci-dessus pour le premier mode sont à appliquer ici lorsque le coefficient mesuré CF atteint un troisième seuil d'inclinaison SC3.

Dans une variante de réalisation non limitative applicables aux trois modes de réalisation, cette étape intervient parallèlement à la septième étape suivante. C'est à dire que l'interdiction intervient en même temps que la commutation en position code.

Dans une autre variante de réalisation non limitative applicable aux trois modes de réalisation, cette étape intervient avant la septième étape.

On notera qu'il est préférable de ne pas effectuer cette étape après la septième étape, car sinon on risquerait d'avoir une commutation intempestive du mode position code en mode position route que l'on veut éviter ici.

**Dans une septième étape 7),** on effectue une commutation des projecteurs PJ dans le premier mode d'éclairage MOD_C en vue de réduire la rétrodiffusion du faisceau lumineux FX des projecteurs PJ sur le phénomène perturbateur de visibilité F lorsque la rétrodiffusion détectée atteint un troisième seuil T3.

Dans l'exemple non limitatif, le premier mode d'éclairage MOD_C est le mode en position code. Ainsi, cela évite qu'un conducteur du véhicule automobile V soit gêné par le phénomène de rétrodiffusion qui résulte de la diffusion du faisceau lumineux FX des projecteurs PJ sur le phénomène perturbateur de visibilité F. On atténue ainsi ce phénomène de rétrodiffusion puisque le premier mode MOD_C éclaire moins le phénomène perturbateur de visibilité F.

Ainsi, non seulement le conducteur n'aura pas une visibilité dégradée (on évite que le conducteur voit moins loin en plein phare qu'en feux de croisement), mais également le conducteur n'aura pas de risque d'être gêné par une quantité de lumière trop importante du fait de la rétrodiffusion du faisceau lumineux FX.

Ce troisième seuil T3 correspond ainsi au seuil de rétrodiffusion au dessus duquel le conducteur du véhicule automobile V considéré est gêné par la rétrodiffusion des projecteurs en position route sur le brouillard.

Dans ce cas, les projecteurs sont commutés automatiquement de la position route à la position code.

Dans une première variante de réalisation non limitative, la commutation des projecteurs du mode position route au mode position code s'effectue sans augmentation de la portée d'éclairage B par rapport à la portée maximum autorisée BM. On est en position code réglementé.

Dans une deuxième variante de réalisation non limitative, la commutation des projecteurs du mode position route au mode position code s'effectue avec augmentation de la portée d'éclairage B par rapport à la portée maximum autorisée BM.

Cette étape est décrite ci-après selon les trois modes de réalisation non limitatifs décrits précédemment lors de la première étape (mesure de distance de visibilité, aire, coefficient directeur).

Premier mode de réalisation

Ainsi, selon ce premier mode, on effectue une commutation des projecteurs PJ dans le premier mode d'éclairage MOD_C en vue de réduire la rétrodiffusion du faisceau lumineux FX des projecteurs PJ sur le phénomène perturbateur de visibilité F lorsque la distance de visibilité D atteint un troisième seuil de visibilité S3 et en particulier lorsqu'elle devient inférieure à ce troisième seuil S3.

Le troisième seuil de visibilité S3 correspond donc ici au troisième seuil T3.

Ce troisième seuil de visibilité S3 correspond ainsi au seuil de distance de visibilité en dessous duquel le conducteur du véhicule automobile V considéré est gêné par la rétrodiffusion des projecteurs en position route sur le brouillard.

Les exemples des Fig. 16 et 17 montrent une commutation sans augmentation de portée au temps t2, tandis que l'exemple de la Fig. 18 montre une commutation avec augmentation de portée au temps t2.

Ainsi, la première variante de réalisation est illustrée dans les exemples de la Fig. 16 et 17 :

- Au temps t1, la distance de visibilité D diminue car le véhicule automobile V entre progressivement dans une nappe de brouillard par exemple.

- Au temps t2, la distance de visibilité atteint le troisième seuil de visibilité S3 et devient inférieure. Le brouillard devient plus intense. La commutation du mode d'éclairage en position code MOD_C1 sans augmentation de portée est exécutée.

- Au temps t3, la distance de visibilité D recommence à augmenter progressivement. La nappe de brouillard devient moins dense.

- Au temps t4, la distance de visibilité D devient supérieure au troisième seuil de visibilité S3. On demeure toujours en position code réglementée MOD_C1, donc sans augmentation de portée.

Par ailleurs, la deuxième variante de réalisation est illustrée dans l'exemple de la Fig. 18 :

- Au temps t1, la distance de visibilité D diminue car le véhicule automobile V entre progressivement dans une nappe de brouillard par exemple.

- Au temps t2, la distance de visibilité atteint le troisième seuil de visibilité S3 et devient inférieure. Le brouillard devient plus intense. La commutation du mode d'éclairage en position code est exécutée avec une portée augmentée MOD_C3 car la rétrodiffusion dans cette position n'est pas très importante.

- Entre les temps t2 et t3, la distance de visibilité D continue de diminuer, la rétrodiffusion augmente donc. La portée d'éclairage B est donc diminuée au fur et à mesure que la distance de visibilité D diminue afin de diminuer la rétrodiffusion sur le brouillard F.

- Au temps t3, la distance de visibilité D devient inférieure au deuxième seuil de visibilité S2, seuil correspondant à une position code réglementée. La portée d'éclairage B a été diminuée jusqu'à atteindre la portée maximum autorisée BM et les projecteurs PJ sont parvenus à une position code sans portée augmentée MOD_C1.

- Au temps t4, la distance de visibilité D recommence à augmenter progressivement. La nappe de brouillard devient moins dense. On demeure toujours en position code réglementée MOD_C1, donc sans augmentation de portée.

On remarquera que dans les deux premiers exemples des Fig. 16 et 17, dans la première variante de réalisation, le deuxième seuil de visibilité S2 est supérieur au troisième seuil de visibilité S3, tandis que dans la deuxième variante de réalisation, dans le troisième exemple de la Fig. 18, le deuxième seuil de visibilité S2 est inférieur au troisième seuil de visibilité S3.

L'intérêt de la première variante de réalisation est de prendre en compte le phénomène perturbateur de visibilité F, et donc la rétrodiffusion, dès qu'elle devient gênante pour le conducteur du véhicule automobile V, de sorte à régler les projecteurs PJ pour qu'elle ne soit plus gênante pour le conducteur.

Dans ce cas là, comme vu précédemment, lors de la commutation des projecteurs dans le mode position code MOD_C, la portée d'éclairage B du faisceau lumineux FX des projecteurs est égale à la portée maximum autorisée BM. Il n'y a pas augmentation de portée.

Ainsi, dans un exemple non limitatif, si le troisième seuil de visibilité S3 est fixé à 40 mètres, le deuxième seuil de visibilité S2 sera supérieur au troisième seuil de visibilité S3, et égal à 50 mètres.

On remarquera que dans cet exemple où le troisième seuil de visibilité S3 est fixé à 40 mètres, si le deuxième seuil de visibilité S2 était inférieur au troisième seuil de visibilité S3 comme dans la deuxième variante de réalisation, il y aurait commutation en position code avec augmentation de portée, ce qui serait gênant pour le conducteur, car au seuil de visibilité S3 égal 40 mètres, la rétrodiffusion du faisceau lumineux augmenté est trop forte.

L'intérêt de la deuxième variante de réalisation est de toujours pouvoir détecter la rétrodiffusion en mode position code.

Dans ce cas là, comme vu précédemment, lors de la commutation des projecteurs dans le mode position code MOD_C, la portée d'éclairage B du faisceau lumineux FX des projecteurs est augmentée par rapport à la portée maximum autorisée BM de manière à éclairer jusqu'au premier seuil de visibilité S1, puis diminuée au fur et à mesure que la distance de visibilité diminue.

Ainsi, dans un exemple non limitatif, si le troisième seuil de visibilité S3 est fixé à 80 mètres, le deuxième seuil de visibilité S2 sera inférieur au troisième seuil de visibilité S3, et égal à 50 mètres.

On remarquera que dans cet exemple où le troisième seuil de visibilité S3 est fixé à 80 mètres, si le deuxième seuil de visibilité S2 était supérieur au troisième seuil de visibilité S3 comme dans la première variante de réalisation, il y aurait commutation en position code sans augmentation de portée, ce qui serait gênant pour pouvoir détecter la rétrodiffusion par la suite, car au seuil de visibilité S3 égal 80 mètres, la rétrodiffusion du faisceau lumineux est très faible.

Deuxième mode de réalisation

Ainsi, selon ce premier mode, on effectue une commutation des projecteurs PJ dans le premier mode d'éclairage MOD_C en vue de réduire la rétrodiffusion du faisceau lumineux FX des projecteurs PJ sur le phénomène perturbateur de visibilité F lorsque l'aire mesurée A atteint un troisième seuil de surface SA3, tel qu'illustré sur la Fig. 19 au temps t2.

Le troisième seuil de surface SA3 correspond donc ici au troisième seuil T3.

Ce troisième seuil de surface SA3 correspond ainsi au seuil de l'aire mesurée A au dessus duquel le conducteur du véhicule automobile V considéré est gêné par la rétrodiffusion des projecteurs en position route sur le brouillard.

Troisième mode de réalisation

Ainsi, selon ce premier mode, on effectue une commutation des projecteurs PJ dans le premier mode d'éclairage MOD_C en vue de réduire la rétrodiffusion du faisceau lumineux FX des projecteurs PJ sur le phénomène perturbateur de visibilité F lorsque le coefficient directeur mesuré CF atteint un troisième seuil d'inclinaison SC3.

Le troisième seuil d'inclinaison SC3 correspond donc ici au troisième seuil T3.

Ce troisième seuil d'inclinaison SC3 correspond ainsi au seuil du coefficient directeur mesuré CF au dessus duquel le conducteur du véhicule automobile V considéré est gêné par la rétrodiffusion des projecteurs en position route sur le brouillard.

L'exemple de la Fig. 19 du deuxième mode décrit ci-dessus peut être transposé à ce troisième mode.

On notera que dans un mode de réalisation non limitatif applicable aux trois modes de réalisation décrits ci-dessus, la portée d'éclairage B du faisceau lumineux FX des projecteurs est ajustée en fonction des obstacles O se situant dans un environnement avant du véhicule automobile V. Cela permet d'éviter d'éblouir des véhicules croisés ou suivis par le véhicule automobile considéré V comme vu précédemment. Ainsi, si nous sommes dans un mode position code avec portée augmentée, on diminuera la portée augmentée s'il existe un obstacle O tel qu'un véhicule croisé et suivi et selon la distance à laquelle il se trouve.

A la fin de la septième étape, ensuite, on revient à la première étape et ainsi de suite.

Ainsi, les étapes 1 à 7 décrites ci-dessus sont exécutées en temps réel, au fur et à mesure de la modification de la distance de visibilité D qui est due à la présence ou non et aux variations d'un phénomène perturbateur de visibilité F.

Ainsi, le procédé décrit permet de commuter les projecteurs d'un véhicule automobile d'un mode d'éclairage à un autre en fonction du phénomène perturbateur qui survient ou qui disparaît et de ses variations.

Le procédé de l'invention est mis en oeuvre par un dispositif DISP de commutation automatique de projecteurs aptes à émettre un faisceau lumineux FX pour véhicule automobile V d'un mode d'éclairage vers un autre mode d'éclairage, représenté à la Fig. 20.

Ce dispositif DISP est intégré dans le véhicule automobile V.

Ce dispositif DISP comporte notamment :

- une unité d'augmentation UA de la portée d'éclairage B du faisceau lumineux FX des projecteurs PJ par rapport à une portée maximum autorisée BM en fonction de la rétrodiffusion détectée ; et
- une unité de contrôle UC pour :

  ◦ lorsque les projecteurs sont dans un premier mode d'éclairage MOD_C, détecter une rétrodiffusion du faisceau lumineux FX des projecteurs PJ sur un phénomène perturbateur de visibilité F ; et
  ◦ effectuer une commutation des projecteurs PJ dans un deuxième mode d'éclairage MOD_R lorsque la portée d'éclairage B est augmentée par rapport à la portée maximum autorisée BM et la rétrodiffusion atteint un premier seuil déterminé T1.

Selon un mode de réalisation non limitatif, l'unité de contrôle UC permet en outre d'effectuer une commutation des projecteurs PJ dans le premier mode d'éclairage MOD_C en vue de réduire une rétrodiffusion du faisceau lumineux FX des projecteurs (PJ) sur un phénomène perturbateur de visibilité F lorsque la rétrodiffusion détectée atteint à un troisième seuil T3.

Dans un premier mode de réalisation non limitatif, l'unité d'augmentation UA de la portée de l'éclairage des projecteurs comporte un correcteur d'assiette CORR de véhicule automobile et l'augmentation de la portée d'éclairage B en position code s'effectue en utilisant une fonction correction en site pour relever le faisceau lorsque le véhicule automobile comporte une assiette neutre.

En effet, un correcteur d'assiette CORR utilise généralement une fonction correction en site ayant pour but de garantir une portée d'éclairage constante quelque soit les variations d'assiette du véhicule automobile. Cette fonction se traduit par un relèvement du faisceau dans les situations de freinage et un rabaissement du faisceau dans les situations d'accélération afin d'éviter d'éblouir des véhicules croisés ou suivis.

Ainsi, en utilisant cette fonction pour relever le faisceau lumineux FX des projecteurs PJ lorsque le véhicule automobile comporte une assiette neutre alors nous augmentons la portée d'éclairage du code.

Ce premier mode permet d'utiliser un dispositif (le correcteur d'assiette) qui est déjà implanté dans de nombreux véhicules.

Dans un deuxième mode de réalisation non limitatif, l'unité d'augmentation UA de la portée de l'éclairage des projecteurs comporte un module optique MO composé notamment d'un cache mobile CH et d'un actionneur mécanique AC pour actionner le cache mobile CH, le cache mobile étant apte à intercepter notamment une partie du faisceau lumineux FX émis par les projecteurs PJ.

L'augmentation de la portée d'éclairage B en position code s'effectue ainsi en utilisant une fonction d'interception d'une partie du faisceau lumineux FX des projecteurs.

Ainsi, cette fonction est basée sur l'utilisation d'un module optique MO, bien connue de l'homme du métier, appelé module bi-fonction apte à fonctionner en mode position code (position active du cache CH créant un faisceau à coupure réglementée) et en mode position route (position escamotée du cache CH) dans lequel une pluralité de positions intermédiaires du cache mobile CH s'ajoute aux positions connues de manière à intercepter plus ou moins le faisceau lumineux FX émis et ainsi à émettre un faisceau lumineux FX avec des lignes de coupure différentes.

Un module optique bi-fonction étant connu de l'homme du métier, il ne sera pas décrit plus en détail ici.

Ce deuxième mode de réalisation permet d'avoir une flexibilité au niveau des portées du faisceau lumineux FX des projecteurs que l'on veut obtenir.

En effet, le cache mobile CH peut prendre différentes positions intermédiaires qui permettent d'obtenir un très grand nombre de portées différentes du faisceau lumineux FX qui a ainsi une ligne de coupure différente. Par ailleurs, le cache CH peut être mobile selon des variantes différentes ce qui ajoute d'autres possibilités de positions intermédiaires et donc de lignes de coupure et donc de portées différentes. Ainsi dans des exemples non limitatifs, il peut être mobile selon une direction sensiblement perpendiculaire à l'axe optique des projecteurs (y-y) ou encore selon une direction elliptique.

Dans le cas du deuxième mode de réalisation, le module optique MO est intégré dans chacun des projecteurs du véhicule automobile V comme illustré sur la Fig. 20 en pointillés.

On notera que l'unité de contrôle UC permet en outre de piloter l'actionneur mécanique AC. Dans un mode de réalisation non limitatif, le pilotage s'effectue en fonction de la distance de visibilité D mesurée, de l'aire A ou du coefficient directeur CF.

Dans une variante de réalisation, le pilotage s'effectue de sorte à avoir un faisceau lumineux FX non éblouissant dans le cas où un obstacle se situe devant le véhicule automobile V comme décrit précédemment.

Ainsi, ces deux modes de réalisation de l'unité d'augmentation UA permettent de modifier la ligne de coupure du faisceau lumineux FX des projecteurs pour relever le faisceau par rapport à la portée maximum autorisée BM par la réglementation européenne sur l'éclairage.

On rappelle que sur un plan réglementaire, la ligne de coupure réglementée d'un faisceau lumineux FX d'un projecteur en position code est orientée avec une pente comprise entre -1% radian et -1.5% radian. Pour des projecteurs se situant à 60 cm du sol avec un réglage à -1 %rad le faisceau lumineux FX éclaire le sol sur une distance d'environ 60 mètres en avant du véhicule automobile.

Dans un troisième mode de réalisation, on notera que l'on peut également avoir une combinaison des deux modes.

On notera que la mise en oeuvre du procédé de commutation exposé ci-dessus peut être effectuée au moyen d'un dispositif micro programmé « software », d'une logique câblée et/ou de composants électroniques « hardware ».

Ainsi, le dispositif de commutation DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 20, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus. Ainsi, le procédé peut s'appliquer à un phénomène perturbateur F qui outre le brouillard, peut être de la forte pluie ou encore de la neige dans des exemples non limitatifs.

Ainsi, l'invention présente notamment les avantages suivants :

- Elle permet d'augmenter la rétrodiffusion générée par le faisceaux lumineux des projecteurs PJ en position code éclairant un phénomène perturbateur de visibilité en augmentant la portée d'éclairage du faisceau lumineux, et ainsi avoir une rétrodiffusion suffisante pour pouvoir détecter un phénomène perturbateur de visibilité. On a ainsi une portée d'éclairage maximisée de manière à voir une rétrodiffusion voulue ;
- Elle permet d'autoriser à nouveau une commutation d'une position code en une position route si la rétrodiffusion atteint un premier seuil déterminé. La commutation en position route peut alors s'effectuer si :

    ◦ le véhicule automobile V se retrouve dans un environnement non éclairé car il n'existe plus ou très peu de phénomène perturbateur de visibilité, et le cas échéant si
    ◦ aucun véhicule ne se trouve devant le véhicule automobile considéré V ;

- Elle permet de détecter un phénomène perturbateur de visibilité, soit à partir d'une mesure de distance de visibilité, soit à partir d'une analyse de courbe de niveaux de gris ;
- Elle permet de ne pas utiliser une source additionnelle telle que des infrarouges pour mesurer la distance de visibilité et ainsi économiser en moyens ;
- Elle permet d'augmenter la portée d'éclairage du faisceau lumineux soit par paliers, soit de façon progressive ;
- Elle permet de réguler la portée d'éclairage entre le troisième seuil T3 et le deuxième seuil T2 et donc de pouvoir réguler la rétrodiffusion dans le brouillard pour gêner le moins possible le conducteur ;
- Elle permet de pouvoir optimiser au mieux la visibilité du conducteur et donc de pouvoir conserver une portée optimale sans que la rétrodiffusion ne gêne le conducteur ;
- Elle permet de ne pas éblouir un conducteur d'un véhicule croisé ou suivi lorsque la portée d'éclairage prend en compte les obstacles se situant devant le véhicule automobile considéré V ;
- Elle apporte au conducteur un confort visuel et un sentiment de sécurité lorsqu'il conduit son véhicule ;
- Elle permet d'obtenir un niveau de visibilité suffisant lorsque les projecteurs sont en position code pour pouvoir mesurer dans cette position la distance de visibilité/l'aire/le coefficient directeur ;
- Elle se base sur des fonctions déjà existantes dans l'état de la technique pour augmenter la portée d'éclairage en utilisant soit une fonction automatique de correction d'assiette généralement utilisée pour des lampes à décharge, soit un fonction d'interception du faisceau lumineux ;
- Elle permet de s'intégrer facilement dans un module utilisant déjà la fonction de commutation automatique d'un mode d'éclairage vers un autre mode d'éclairage standard ; et
- Elle est simple, rapide et économique à mettre en oeuvre du fait du traitement simple, rapide et économique des différentes étapes.

**Revendications**

1. Procédé de commutation automatique de projecteurs (PJ) aptes à émettre un faisceau lumineux (FX) pour véhicule automobile (V) d'un premier mode d'éclairage vers un deuxième mode d'éclairage, le premier mode d'éclairage éclairant moins que le deuxième mode d'éclairage,
**caractérisé**
**en ce qu'**il comporte les étapes de :

    - lorsque les projecteurs sont dans le premier mode d'éclairage (MOD_C), détecter une rétrodiffusion du faisceau lumineux (FX) des projecteurs (PJ) sur un phénomène perturbateur de visibilité (F) ;
    - augmenter la portée d'éclairage (B) du faisceau lumineux (FX) des projecteurs (PJ) par rapport à une portée maximum autorisée (BM) en fonction de la rétrodiffusion détectée ; et
    - effectuer une commutation des projecteurs (PJ) dans le deuxième mode d'éclairage (MOD_R) lorsque la rétrodiffusion atteint un premier seuil déterminé (T1).

2. Procédé de commutation automatique selon la revendication 1, selon lequel le premier seuil (T1) est déterminé de manière à ce que la visibilité dans le deuxième mode d'éclairage (MOD_R) soit supérieure à la visibilité dans le premier mode d'éclairage (MOD_C).

3. Procédé de commutation automatique selon la revendication 1, selon lequel l'étape de détection d'une rétrodiffusion s'effectue par une mesure d'une distance de visibilité (D) et/ou par une analyse d'une courbe de niveaux de gris obtenue à partir d'une image acquise de l'environnement du véhicule automobile (V), .

4. Procédé de commutation automatique selon la revendication précédente, selon lequel l'augmentation de la portée d'éclairage en fonction de la rétrodiffusion détectée s'effectue de manière à pouvoir mesurer la distance de visibilité jusqu'à un premier seuil de visibilité (S1) si la distance de visibilité mesurée (D) est supérieure à un deuxième seuil de visibilité (S2).

5. Procédé de commutation automatique selon la revendication 3, selon lequel l'analyse de la courbe de niveaux de gris comporte la détermination d'une aire (A) dans ladite courbe et la détection d'une rétrodiffusion s'effectue en fonction d'au moins une première valeur seuil de surface (SA1) dans ladite aire.

6. Procédé de commutation automatique selon la revendication précédente, selon lequel l'augmentation de la portée d'éclairage en fonction de la rétrodiffusion détectée s'effectue de manière à pouvoir mesurer l'aire (A) dans ladite courbe jusqu'à un premier seuil de surface (SA1) si l'aire atteint une deuxième valeur seuil de surface (SA2).

**7.** Procédé de commutation automatique selon la revendication précédentes 3 ou 5, selon lequel l'analyse de la courbe de niveaux de gris comporte la détermination d'au moins une tangente à ladite courbe et la détection d'une rétrodiffusion s'effectue en fonction d'au moins une première valeur seuil d'inclinaison (SC1) d'un coefficient directeur (CF) de ladite tangente.

**8.** Procédé de commutation automatique selon la revendication précédente, selon lequel l'augmentation de la portée d'éclairage en fonction de la rétrodiffusion détectée s'effectue de manière à pouvoir mesurer un coefficient directeur (CF) d'au moins une tangente dans ladite courbe jusqu'à un premier seuil d'inclinaison (SC1) si le coefficient atteint une deuxième valeur seuil d'inclinaison (SC2).

**9.** Procédé de commutation automatique selon la revendication précédente, selon lequel il comporte en outre une étape supplémentaire d'autoriser la commutation automatique des projecteurs (PJ) du premier mode d'éclairage (MOD_C) vers le deuxième mode d'éclairage (MOD_R) lorsque la rétrodiffusion atteint le premier seuil déterminé (T1).

**10.** Procédé de commutation automatique selon l'une des revendications précédentes, selon lequel il comporte en outre une étape supplémentaire d'effectuer une commutation des projecteurs (PJ) dans le premier mode d'éclairage (MOD_C) en vue de réduire une rétrodiffusion du faisceau lumineux (FX) des projecteurs (PJ) sur un phénomène perturbateur de visibilité (F) lorsque la rétrodiffusion détectée atteint un troisième seuil (T3).

**11.** Procédé de commutation automatique selon la revendication précédente, selon lequel il comporte en outre une étape supplémentaire d'interdire la commutation automatique des projecteurs (PJ) du premier mode d'éclairage (MOD_C) vers le deuxième mode d'éclairage (MOD_R) lorsque la rétrodiffusion détectée atteint un troisième seuil (T3).

**12.** Procédé de commutation automatique selon l'une des revendications précédentes 10 ou 11, selon lequel la commutation des projecteurs (PJ) dans le premier mode d'éclairage (MOD_C2, MOD_C3) s'effectue avec augmentation de la portée d'éclairage par rapport à la portée maximum autorisée (BM).

**13.** Procédé de commutation automatique selon la revendication précédente, selon lequel la portée d'éclairage (B) du faisceau lumineux (FX) des projecteurs (PJ) est diminuée au fur et à mesure que la rétrodiffusion augmente.

**14.** Procédé de commutation automatique selon l'une des revendications précédentes, selon lequel l'augmentation de la portée d'éclairage (B) s'effectue en utilisant une fonction de correction en site pour relever le faisceau lumineux (FX) des projecteurs (PJ) lorsque le véhicule automobile (V) comporte une assiette neutre.

**15.** Procédé de commutation automatique selon l'une des revendications précédentes, selon lequel l'augmentation de la portée d'éclairage (B) s'effectue en utilisant une fonction d'interception d'une partie du faisceau lumineux (FX) des projecteurs (PJ).

**16.** Dispositif de commutation automatique de projecteurs aptes à émettre un faisceau lumineux pour véhicule automobile (V) d'un premier mode d'éclairage vers un deuxième mode d'éclairage, le premier mode d'éclairage éclairant moins que le deuxième mode d'éclairage, **caractérisé en ce qu'**il comporte :

- une unité d'augmentation (UA) de la portée d'éclairage (B) du faisceau lumineux (FX) des projecteurs (PJ) par rapport à une portée maximum autorisée (BM) en fonction de la rétrodiffusion détectée ; et
- une unité de contrôle (UC) pour :
- lorsque les projecteurs sont dans le premier mode d'éclairage (MOD_C), détecter une rétrodiffusion du faisceau lumineux (FX) des projecteurs (PJ) sur un phénomène perturbateur de visibilité (F) ; et
- effectuer une commutation des projecteurs (PJ) dans le deuxième mode d'éclairage (MOD_R) lorsque la portée d'éclairage (B) est augmentée par rapport à la portée maximum autorisée (BM) et la rétrodiffusion atteint un premier seuil déterminé (T1).

**17.** Dispositif de commutation automatique selon la revendication précédente, selon lequel l'unité d'augmentation (UA) de la portée d'éclairage du faisceau lumineux (FX) des projecteurs (PJ) comporte un correcteur d'assiette (CORR) de véhicule automobile.

**18.** Produit programme d'ordinateur (PG) comportant une ou plusieurs séquences d'instructions exécutables par une unité de traitement d'information, l'exécution desdites séquences d'instructions permettant une mise en oeuvre du procédé selon l'une quelconque des revendications précédentes 1 à 15.

**Patentansprüche**

**1.** Verfahren zum automatischen Umschalten von Scheinwerfern (PJ) zum Emittieren eines Lichtbündels (FX) für Kraftfahrzeuge (V) von einem ersten Beleuchtungsmodus in einen zweiten Beleuchtungsmodus, wobei der erste Beleuchtungsmodus weniger stark leuchtet als der zweite Beleuchtungsmodus, **dadurch gekennzeichnet, dass** es die Schritte umfasst:

    - Detektieren einer Rückstreuung des Lichtbündels (FX) der Scheinwerfer (PJ) infolge eines die Sicht beeinträchtigenden Phänomens (F), wenn sich die Scheinwerfer im ersten Beleuchtungsmodus (MOD_C) befinden;
    - Erhöhen der Reichweite (B) des Lichtbündels (FX) der Scheinwerfer (PJ) bezogen auf eine maximal zulässige Reichweite (BM) abhängig von der detektierten Rückstreuung; und
    - Umschalten der Scheinwerfer (PJ) in den zweiten Beleuchtungsmodus (MOD_R), wenn die Rückstreuung einen ersten festgelegten Schwellenwert (T1) erreicht.

2.  Automatisches Umschaltverfahren nach Anspruch 1,
bei dem der erste Schwellenwert (T1) solchermaßen festgelegt ist, dass die Sicht im zweiten Beleuchtungsmodus (MOD_R) größer ist als die Sicht im ersten Beleuchtungsmodus (MOD_C).

3.  Automatisches Umschaltverfahren nach Anspruch 1,
bei dem der Schritt zum Detektieren einer Rückstreuung durch Messen einer Sichtweite (D) und/oder durch Analysieren einer Grauwertkurve erfolgt, die mittels eines von der Umgebung des Kraftfahrzeugs (V) aufgenommenen Bildes gewonnen wird.

4.  Automatisches Umschaltverfahren nach dem vorhergehenden Anspruch,
bei dem die Beleuchtungsreichweite abhängig von der detektierten Rückstreuung solchermaßen erhöht wird, dass die Sichtweite bis zu einem ersten Sichtschwellenwert (S1) gemessen werden kann, wenn die gemessene Sichtweite (D) größer ist als ein zweiter Sichtschwellenwert (S2).

5.  Automatisches Umschaltverfahren nach Anspruch 3,
bei dem die Analyse der Grauwertkurve die Bestimmung einer Fläche (A) in dieser Kurve umfasst und die Detektion einer Rückstreuung abhängig von wenigstens einem ersten Oberflächenschwellenwert (SA1) in dieser Fläche erfolgt.

6.  Automatisches Umschaltverfahren nach dem vorhergehenden Anspruch,
bei dem die Beleuchtungsreichweite abhängig von der detektierten Rückstreuung solchermaßen erhöht wird, dass die Fläche (A) in der Kurve bis zu einem ersten Oberflächenschwellenwert (SA1) gemessen werden kann, wenn die Fläche einen zweiten Oberflächenschwellenwert (SA2) erreicht.

7.  Automatisches Umschaltverfahren nach einem der vorhergehenden Ansprüche 3 oder 5,
bei dem die Analyse der Grauwertkurve die Bestimmung wenigstens einer Tangente der Kurve umfasst und die Detektion einer Rückstreuung abhängig von wenigstens einem ersten Neigungsschwellenwert (SC1) eines Leitkoeffizienten (CF) dieser Tangente erfolgt.

8.  Automatisches Umschaltverfahren nach dem vorhergehenden Anspruch,
bei dem die Beleuchtungsreichweite abhängig von der detektierten Rückstreuung solchermaßen erhöht wird, dass ein Leitkoeffizient (CF) wenigstens einer Tangente in dieser Kurve bis zu einem ersten Neigungsschwellenwert (SC1) gemessen werden kann, wenn der Koeffizient einen zweiten Neigungsschwellenwert (SC2) erreicht.

9.  Automatisches Umschaltverfahren nach dem vorhergehenden Anspruch,
das ferner einen zusätzlichen Schritt umfasst, der das automatische Umschalten der Scheinwerfer (PJ) vom ersten Beleuchtungsmodus (MOD_C) in den zweiten Beleuchtungsmodus (MOD_R) gestattet, wenn die Rückstreuung den ersten festgelegten Schwellenwert (T1) erreicht.

10.  Automatisches Umschaltverfahren nach einem der vorhergehenden Ansprüche,
das ferner einen zusätzlichen Schritt zum Umschalten der Scheinwerfer (PJ) in den ersten Beleuchtungsmodus (MOD_C) umfasst, um eine Rückstreuung des Lichtbündels (FX) der Scheinwerfer (PJ) infolge eines die Sicht beeinträchtigenden Phänomens (F) zu verringern, wenn die detektierte Rückstreuung einen dritten Schwellenwert (T3) erreicht.

11.  Automatisches Umschaltverfahren nach dem vorhergehenden Anspruch,
das ferner einen zusätzlichen Schritt umfasst, der das automatische Umschalten der Scheinwerfer (PJ) vom ersten Beleuchtungsmodus (MOD_C) in den zweiten Beleuchtungsmodus (MOD_R) unterbindet, wenn die detektierte Rückstreuung einen dritten Schwellenwert (T3) erreicht.

12.  Automatisches Umschaltverfahren nach einem der vorhergehenden Ansprüche 10 oder 11,
bei dem das Umschalten der Scheinwerfer (PJ) in den ersten Beleuchtungsmodus (MOD_C2, MOD_C3) unter Erhöhung der Beleuchtungsreichweite bezogen auf die maximal zulässige Reichweite (BM) erfolgt.

**13.** Automatisches Umschaltverfahren nach dem vorhergehenden Anspruch, bei dem die Beleuchtungsreichweite (B) des Lichtbündels (FX) der Scheinwerfer (PJ) mit zunehmender Rückstreuung verringert wird.

**14.** Automatisches Umschaltverfahren nach einem der vorhergehenden Ansprüche, bei dem das Erhöhen der Beleuchtungsreichweite (B) dadurch erfolgt, dass eine Höhenregelungsfunktion genutzt wird, um das Lichtbündel (FX) der Scheinwerfer (PJ) anzuheben, wenn das Kraftfahrzeug (V) ein neutrales Niveau aufweist.

**15.** Automatisches Umschaltverfahren nach einem der vorhergehenden Ansprüche, bei dem das Erhöhen der Reichweite (B) dadurch erfolgt, dass eine Funktion zum Abfangen eines Teils des Lichtbündels (FX) der Scheinwerfer (PJ) genutzt wird.

**16.** Vorrichtung zum automatischen Umschalten von Scheinwerfern zum Emittieren eines Lichtbündels für Kraftfahrzeuge (V) von einem ersten Beleuchtungsmodus in einen zweiten Beleuchtungsmodus, wobei der erste Beleuchtungsmodus weniger stark leuchtet als der zweite Beleuchtungsmodus, **dadurch gekennzeichnet, dass** sie umfasst:

- eine Einheit (UA) zum Erhöhen der Reichweite (B) des Lichtbündels (FX) der Scheinwerfer (PJ) bezogen auf eine maximal zulässige Reichweite (BM) abhängig von der detektierten Rückstreuung; und
- eine Steuereinheit (UC) zum

- Detektieren einer Rückstreuung des Lichtbündels (FX) der Scheinwerfer (PJ) infolge eines die Sicht beeinträchtigenden Phänomens (F), wenn sich die Scheinwerfer im ersten Beleuchtungsmodus (MOD_C) befinden; und
- Umschalten der Scheinwerfer (PJ) in den zweiten Beleuchtungsmodus (MOD_R), wenn die Beleuchtungsreichweite (B) bezogen auf die maximal zulässige Reichweite (BM) erhöht wird und die Rückstreuung einen ersten Schwellenwert (T1) erreicht.

**17.** Automatische Umschaltvorrichtung nach dem vorhergehenden Anspruch, bei der die Einheit (UA) zur Erhöhung der Beleuchtungsreichweite des Lichtbündels (FX) der Scheinwerfer (PJ) einen Kraftfahrzeugniveauregler (CORR) umfasst.

**18.** Computerprogrammprodukt (PG) mit einer oder mehreren durch eine Datenverarbeitungseinheit ausführbare Befehlssequenzen, wobei die Ausführung der Befehlssequenzen eine Durchführung des Verfahrens nach einem der vorhergehenden Ansprüche 1 bis 15 erlaubt.

**Claims**

**1.** Method for automatic switching of headlights (PJ) which can emit a light beam (FX) for a motor vehicle (V) from a first lighting mode towards a second lighting mode, the first lighting mode lighting less than the second lighting mode, **characterised in that** it comprises the steps of:

- when the headlights are in the first lighting mode (MOD C), detecting backward diffusion of the light beam (FX) of the headlights (PJ) onto a visibility disruption phenomenon (F);
- increasing the lighting range (B) of the light beam (FX) of the headlights (PJ) relative to a maximum range authorised (BM) according to the backward diffusion detected; and
- carrying out switching of the headlights (PJ) into the second lighting mode (MOD_R) when the backward diffusion reaches a first determined threshold (T3).

**2.** Method for automatic switching according to claim 1, according to which the first threshold (T1) is determined such that the visibility in the second lighting mode (MOD_R) is better than the visibility in the first lighting mode (MOD_C).

**3.** Method for automatic switching according to claim 1, according to which the step of detection of backward diffusion is carried out by a measurement of a visibility distance (D) and/or by an analysis of a curve of levels of grey obtained from an image acquired of the environment of the motor vehicle (V).

**4.** Method for automatic switching according to the preceding claim, according to which the increase in the lighting range according to the backward diffusion detected is carried out such as to be able to measure the visibility distance as far as a first visibility threshold (S1), if the visibility distance measured (D) is greater than a second visibility threshold (S2).

**5.** Method for automatic switching according to claim 3, according to which the analysis of the curve of levels of grey comprises the determination of an area (A) in the said curve, and the detection of backward diffusion is carried out according to at least a first surface threshold value (SA1) in the said area.

**6.** Method for automatic switching according to the preceding claim, according to which the increase in the lighting range according to the backward diffusion detected is carried out such as to be able to measure the area (A) in the said curve as far as a first surface threshold (SA1) if the area reaches a second surface threshold value (SA2).

**7.** Method for automatic switching according to the preceding claims 3 or 5, according to which the analysis of the curve of levels of grey comprises the determination of at least one tangent to the said curve, and the detection of backward diffusion is carried out according to at least one first inclination threshold value (SC1) of a director coefficient (CF) of the said tangent.

**8.** Method for automatic switching according to the preceding claim, according to which the increase in the lighting range according to the backward diffusion detected is carried out such as to be able to measure a director coefficient (CF) of at least one tangent in the said curve, as far as a first inclination threshold (SC1) if the coefficient reaches a second inclination threshold value (SC2).

**9.** Method for automatic switching according to the preceding claim, according to which it additionally comprises a supplementary step of authorising the automatic switching of the headlights (PJ) of the first lighting mode (MOD_C) towards the second lighting mode (MOD_R), when the backward diffusion reaches the first determined threshold (T1).

**10.** Method for automatic switching according to one of the preceding claims, according to which it additionally comprises a supplementary step of carrying out switching of the headlights (PJ) in the first lighting mode (MOD_C) in order to reduce backward diffusion of the light beam (FX) of the headlights (PJ) onto a visibility disruption phenomenon (F) when the backward diffusion detected reaches a third threshold (T3).

**11.** Method for automatic switching according to the preceding claim, according to which it additionally comprises a supplementary step of preventing the automatic switching of the headlights (PJ) of the first lighting mode (MOD_C) towards the second lighting mode (MOD_R) when the backward diffusion detected reaches a third threshold (T3).

**12.** Method for automatic switching according to one of the preceding claims 10 or 11, according to which the switching of the headlights (PJ) in the first lighting mode (MOD_C2, MOD_C3) is carried out with increase of the lighting range relative to the maximum range authorised (BM).

**13.** Method for automatic switching according to the preceding claim, according to which the lighting range (B) of the light beam (FX) of the headlights (PJ) is decreased as the backward diffusion increases.

**14.** Method for automatic switching according to one of the preceding claims, according to which the increase in the lighting range (B) is carried out by using an on-site correction function in order to detect the light beam (FX) of the headlights (PJ) when the motor vehicle (V) comprises a neutral position.

**15.** Method for automatic switching according to one of the preceding claims, according to which the increase in the lighting range (B) is carried out by using a function of interception of part of the light beam (FX) of the headlights (PJ).

**16.** Device for automatic switching of headlights which can emit a light beam for a motor vehicle (V) from a first lighting mode towards a second lighting mode, the first lighting mode lighting less than the second lighting mode, **characterised in that** it comprises:

- a unit (UA) for increase of the lighting range (B) of the light beam (FX) of the headlights (PJ) relative to a maximum range authorised (BM) according to the backward diffusion detected: and
- a control unit (UC) in order:

- when the headlights are in the first lighting mode (MOD_C), to detect backward diffusion of the light beam (FX) of the headlights (PJ) onto a visibility disruption phenomenon (F); and
- to carry out switching of the headlights (PJ) into the second lighting mode (MOD_R) when the lighting range (B) is increased relative to the maximum range authorised (BM) and the backward diffusion reaches a first determined threshold (T1).

**17.** Automatic switching device according to the preceding claim, according to which the unit (UA) for increase of the lighting range of the light beam (FX) of the headlights (PJ) comprises a corrector (CORR) for the position of the motor vehicle.

**18.** Computer program product (PG) comprising one or a plurality of sequences of instructions which can be executed by a data processing unit, the execution of the said sequences of instructions permitting implementation of the method according to any one of the preceding claims 1 to 15.

EP 2 199 152 B1

DETECT_R(MOD_C) — 1

ADJUST_B — 2

ON_COM1 — 3

COM(MOD_R) — 4

DETECT_R(MOD_R) — 5

OFF_COM1 — 6

COM(MOD_C) — 7

**Fig. 1**

EP 2 199 152 B1

```
                    ┌──────────────────────────────────────────────┐
                    │              DETECT_R (D)                     │─── 1
                    └──────────────────────────────────────────────┘
    ┌───────────────────────────────────────────────────────────────── 2
    │  ADJUST_B
    │                                        ── 2a
    │  ┌─────────────────────────────────────────────────────────┐
    │  │  COMP_D                                                   │
    │  │  ┌──────────┐        ┌───────────────┐   ┌──────────┐     │
    │  │  │  D<S2    │─ 2ai   │  S2<D < S1    │─2aii │ D>S1    │─ 2aiii
    │  │  └──────────┘        └───────────────┘   └──────────┘     │
    │  │                              │                            │
    │  │       ┌──────────────────────────────────────┐           │
    │  │       │    ─ 2bi          ─ 2bii              │           │
    │  │       │  ┌──────────────┐ ┌───────────────┐   │── 2b      │
    │  │       │  │ ADJUST_B(P1) │ │ ADJUST_B(D)   │   │           │
    │  │       │  └──────────────┘ └───────────────┘   │           │
    │  │       └──────────────────────────────────────┘           │
    └──┴───────────────────────────────────────────────────────────┘

            ┌──────────────────────────────────────────────┐
            │              ON_COM1                          │
            └──────────────────────────────────────────────┘── 3

            ┌──────────────────────────────────────────────┐
            │              COM(MOD_R)                       │── 4
            └──────────────────────────────────────────────┘

            ┌──────────────────────────────────────────────┐
            │  DETECT_R (D)                                 │── 5
            │         <  D < S3 ?  >                        │
            │  OK                            NOK            │
            └──────────────────────────────────────────────┘

            ┌──────────────────────────────────────────────┐
            │              OFF_COM1                         │── 6
            └──────────────────────────────────────────────┘

            ┌──────────────────────────────────────────────┐
            │              COM(MOD_C)                       │── 7
            └──────────────────────────────────────────────┘
```

**Fig. 2**

Fig. 3

EP 2 199 152 B1

Fig. 4

28

EP 2 199 152 B1

**DETECT_R (I(G))**

ACQ_SQ(I) — 1a

↓

CALC_H(I) — 1b

↓

CALC_ROI(I) — 1c

↓

CALC_CL(ROI) — 1d

— 1

CALC_A(CL, H) — 1e

↓

CALC_F(VAs)/CALC_DVM(A) — 1f

CALC_TG(CL, PR) — 1e

↓

CALC_CF(TG) — 1f

↓

CALC_F(VS)/CALC_DVM(CF) — 1g

**Fig. 5**

**Fig. 7**

**Fig. 6**

**Fig. 8**

**Fig. 9**

Fig. 11

Fig. 10

EP 2 199 152 B1

Fig. 12

Fig. 14

Fig. 13

**Fig. 15**

EP 2 199 152 B1

**Fig. 16**

EP 2 199 152 B1

Fig. 17

**Fig. 18**

EP 2 199 152 B1

Fig. 19

V

DISP

UC

PG

DETECT_R(MOD_C)/DETECT_R(MOD_R)

DETECT_R(D)/DETECT_R(I)

AJUST_B

ON_COM1/OFF_COM1

COM(MOD_R)/COM(MOD_C)

COMP_D/COMP_A/COMP_CF

UA=CORR

PJ

UA=
MO(CH, AC))

**Fig. 20**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040201483 A